# EUROPEAN PATENT APPLICATION

(11) **EP 4 675 578 A1**
(43) Date of publication of application: **07.01.2026**
(21) Application number: 25183841.3
(22) Date of filing: 18.06.2025
(51) Int. Cl.: G06V 20/56, G06V 20/64

(54) **EVALUATION SYSTEM AND EVALUATION METHOD**

(30) Priority: 02.07.2024 JP 2024106869
(71) Applicant: KUBOTA CORPORATION, Osaka-shi, Osaka 556-8601 (JP)
(72) Inventor: KOMIYA, Yuto, SAKAI-SHI, OSAKA, 5900908 (JP); MURAKAWA, Ryoma, SAKAI-SHI, OSAKA, 5900908 (JP); KITAJIMA, Toshihiro, SAKAI-SHI, OSAKA, 5900908 (JP)
(74) Representative: Cabinet Beau de Loménie

(57) **Abstract**

An evaluation system (S) includes an arithmetic processor (20c) configured or programmed to evaluate a shape of a formed object formed by a working device (2) on an agricultural field, based on matching between a template image and a cross-sectional image of a geographical feature including the formed object.

## Description

### BACKGROUND OF THE INVENTION

### Field of the Invention

The present invention relates to an evaluation system and an evaluation method for evaluating the shape of a formed object formed on an agricultural field.

### Description of the Related Art

Japanese Unexamined Patent Application Publication No. 2021-153567 discloses an agricultural traveling vehicle including a direction identifier to identify the direction of a ridge, and a traveling controller to control the agricultural traveling vehicle such that the agricultural traveling vehicle travels in the direction of the ridge identified by the direction identifier.

### SUMMARY OF THE INVENTION

Although the agricultural traveling vehicle in Japanese Unexamined Patent Application Publication No. 2021-153567 is configured to identify the direction of a formed object (e.g., a ridge) formed on an agricultural field, the agricultural traveling vehicle is not configured to evaluate whether the shape of a formed object (e.g., a ridge) is acceptable.

The present invention is directed to addressing the above-mentioned problem associated with the related art. Accordingly, the present invention provides an evaluation system and an evaluation method that make it possible to evaluate whether the shape of a formed object formed by a working device on an agricultural field is acceptable.

An evaluation system according to an example embodiment of the present invention includes an arithmetic processor configured or programmed to evaluate a shape of a formed object formed by a working device on an agricultural field, based on matching between a template image and a cross-sectional image of a geographical feature including the formed object.

The arithmetic processor may be configured or programmed to acquire a geographical feature image representing the geographical feature including the formed object, and generate the cross-sectional image from the geographical feature image.

The formed object may have an elongated shape in plan view. The cross-sectional image may be a cross-sectional image of the geographical feature image taken along a plane perpendicular to a longitudinal direction of the formed object.

The arithmetic processor may be configured or programmed to superimpose the template image on the cross-sectional image, and select, as a position-for-comparison, a position at which an area of overlap of the template image and a cross section of the formed object that is included in the cross-sectional image is largest.

The arithmetic processor may be configured or programmed to determine that the formed object is formed abnormally when a difference between a contour of the template image at the position-for-comparison and a contour of the cross section of the formed object is equal to or greater than a threshold.

The arithmetic processor may be configured or programmed to generate a contour difference image showing the difference between the contour of the template image and the contour of the cross section of the formed object.

The arithmetic processor may be configured or programmed to indicate, in a specific manner, a portion of the contour difference image in which the difference is equal to or greater than the threshold.

The threshold may include a first threshold and a second threshold having a greater value than the first threshold. The arithmetic processor may be configured or programmed to not indicate a portion of the contour difference image in which the difference is equal to or less than the first threshold in the specific manner, indicate a portion of the contour difference image in which the difference is greater than the first threshold and equal to or less than the second threshold in a first specific manner which is a type of the specific manner, and indicate a portion of the contour difference image in which the difference is greater than the second threshold in a second specific manner which is another type of the specific manner different from the first specific manner.

The evaluation system may further include a memory and/or a storage to store the contour difference image and a piece of position information of the contour difference image such that the contour difference image and the piece of position information are associated with each other. The arithmetic processor may be configured or programmed to generate a series difference image in which a plurality of the contour difference images stored in the memory and/or the storage are arranged in the order of positions of the plurality of contour difference images based on a plurality of the pieces of position information of the respective plurality of contour difference images.

The evaluation system may further include a working machine including the working device, a traveling vehicle body to attach the working device thereto, and a position detector to acquire a position of the traveling vehicle body. The memory and/or the storage may store a speed of the traveling vehicle body, the position of the traveling vehicle body acquired by the position detector, a working condition of the working device, and the contour difference image such that the speed of the traveling vehicle body, the position of the traveling vehicle body acquired by the position detector, the working condition of the working device, and the contour difference image are associated with each other.

The evaluation system may further include a sensor assembly to acquire the geographical feature image which is point cloud data representing one or more geographical features in a surrounding area of the working device.

The arithmetic processor may be configured or programmed to generate the cross-sectional image from the point cloud data.

The evaluation system may further include a working machine including the working device, a traveling vehicle body to attach the working device thereto, a position detector to acquire a position of the traveling vehicle body, and the sensor assembly. The arithmetic processor may be configured or programmed to acquire position information of the point cloud data based on position information from the position detector and based on range information from the sensor assembly, convert, based on the position information of the point cloud data, each of pieces of extracted point cloud data extracted from regions-of-interest of the point cloud data into a world coordinate system from a coordinate system of the sensor assembly, the regions-of-interest being different in terms of position information from each other, and combine the pieces of extracted point cloud data of the regions-of-interest in the world coordinate system.

The template image may be an estimated image representing a shape of the formed object that is estimated to be formed by the working device.

An evaluation method according to an example embodiment of the present invention includes causing an arithmetic processor to evaluate a shape of a formed object formed by a working device on an agricultural field, based on matching between a template image and a cross-sectional image of a geographical feature including the formed object.

With one or more example embodiments of the present invention, it is possible to evaluate whether the shape of the formed object formed by a working device on an agricultural field is acceptable.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 is an overall view of an example of an evaluation system.
FIG. 2 is a schematic side view of a working machine.
FIG. 3 is a schematic plan view of the working machine.
FIG. 4 is a perspective view of a position changer as seen from the rear.
FIG. 5 illustrates an example of the sensing range to be sensed by one or more sensor assemblies provided to the working machine.
FIG. 6 illustrates a worked region.
FIG. 7 illustrates a planned travel route.
FIG. 8A illustrates an example of acquisition of a cross-sectional image of a geographical feature from point cloud data obtained through rear sensing by a working machine while ridging is performed.
FIG. 8B illustrates an example of matching between a cross-sectional image and a template image.
FIG. 8C illustrates an example of the estimation result of abnormal locations obtained through matching.
FIG. 9A illustrates point cloud data (geographical feature image) representing one or more geographical features including a ridge having a semi-cylindrical shape.
FIG. 9B illustrates an example of a cross-sectional image of the point cloud data illustrated in FIG. 9A taken along a thick line.
FIG. 9C illustrates an example of a template image having a semi-cylindrical shape.
FIG. 9D illustrates an example of a matching relationship and an example of a contour difference image for a case where the evaluation result for a ridge is OK.
FIG. 9E illustrates an example of a matching relationship and an example of a contour difference image for a case where the evaluation result for a ridge is NOK.
FIG. 10A illustrates point cloud data (geographical feature image) representing one or more geographical features including a ridge having a trapezoidal shape.
FIG. 10B illustrates an example of a cross-sectional image of the point cloud data illustrated in FIG. 10A taken along a thick line.
FIG. 10C illustrates an example of a template image having a trapezoidal shape.
FIG. 10D illustrates an example of a matching relationship and an example of a contour difference image for a case where the evaluation result for a ridge is OK.
FIG. 10E illustrates an example of a matching relationship and an example of a contour difference image for a case where the evaluation result for a ridge is NOK.
FIG. 11 illustrates the relationship between a region-of-interest and all pieces of point cloud data obtained by a second sensor assembly.
FIG. 12A illustrates movement of a region-of-interest associated with movement of a tractor, and superimposition of two regions-of-interest that differ in terms of the position of the tractor.
FIG. 12B illustrates an example of point cloud data without superimposition of regions-of-interest.
FIG. 12C illustrates an example of point cloud data with superimposition of regions-of-interest.
FIG. 13 illustrates movement of a template image in a scanning direction relative to a cross-sectional image to identify a position-for-comparison.
FIG. 14 is a flowchart illustrating changing of the traveling condition or the like of a traveling vehicle body based on an evaluation result obtained when ground work is performed with a ridger.
FIG. 15 illustrates, based on a series difference image, how evaluation of the shape of a single ridge differs between when the evaluation is performed by visual inspection and when the evaluation is performed by automatic detection.
FIG. 16A illustrates point cloud data (geographical feature image) representing a ridge having a semi-cylindrical shape.
FIG. 16B illustrates an example of the locations of shape defects in the point cloud data (geographical feature image) illustrated in FIG. 16A.
FIG. 16C illustrates an example of a matching relationship between a template image and a cross-sectional image of the location of a defect in the shape of a ridge.
FIG. 17A illustrates point cloud data (geographical feature image) representing a ridge having a trapezoidal shape.
FIG. 17B illustrates an example of the location of a shape defect in the point cloud data (geographical feature image) illustrated in FIG. 17A.
FIG. 17C illustrates an example of a matching relationship between a template image and a cross-sectional image of the location of a defect in the shape of a ridge.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

An embodiment of the present invention will now be described with reference to the drawings.

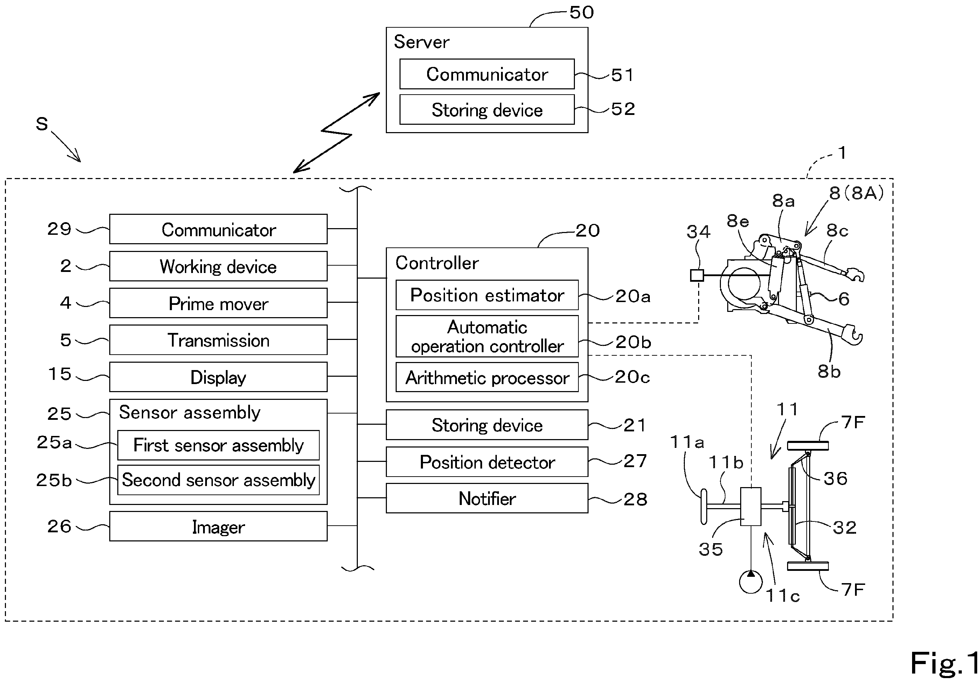

FIG. 1 is an overall view of an example of an evaluation system S according to the embodiment. The evaluation system S evaluates the shape of a formed object M (e.g., a ridge M1) on an agricultural field H1. According to the embodiment, a working machine 1 includes the evaluation system S. A server 50 described later may include part of the evaluation system S (e.g., a position estimator 20a, an automatic operation controller 20b, and/or an arithmetic processor 20c). The evaluation system S may be implemented by the working machine 1 and the server 50 acting in cooperation with each other.

The working machine 1 will be described first. The working machine 1 is a vehicle configured to perform work while traveling. According to the embodiment, the working machine 1 is a tractor including a traveling vehicle body 3 (machine body) to attach a working device 2 (implement) thereto. The working machine 1 may be any vehicle configured to perform work while traveling, and is not limited to a tractor. For example, the working machine 1 may be a farm machine such as a combine or a rice transplanter, or a construction machine such as a compact track loader or a backhoe.

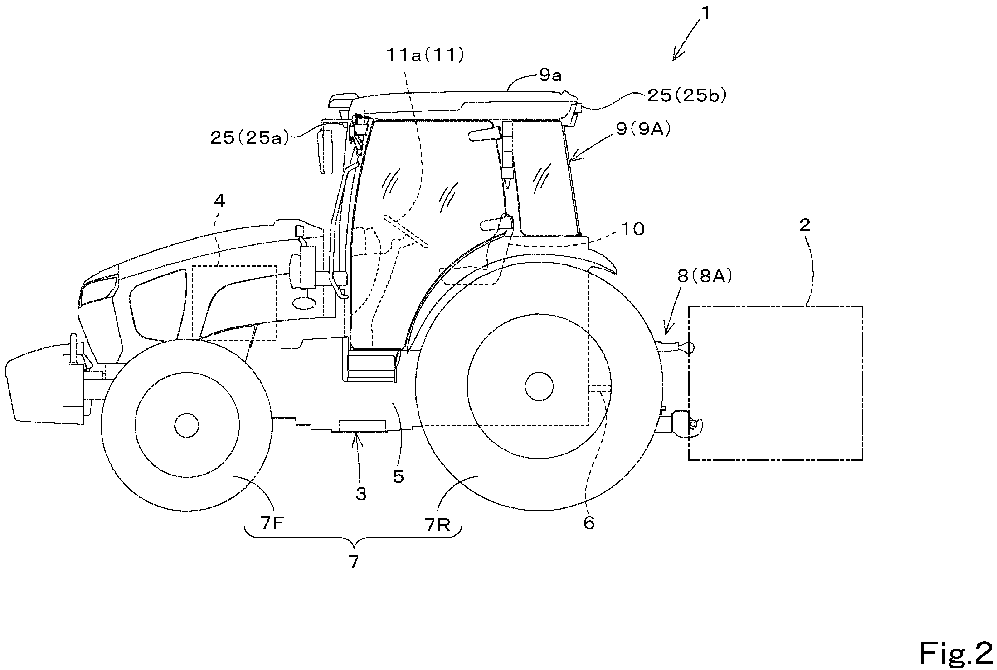

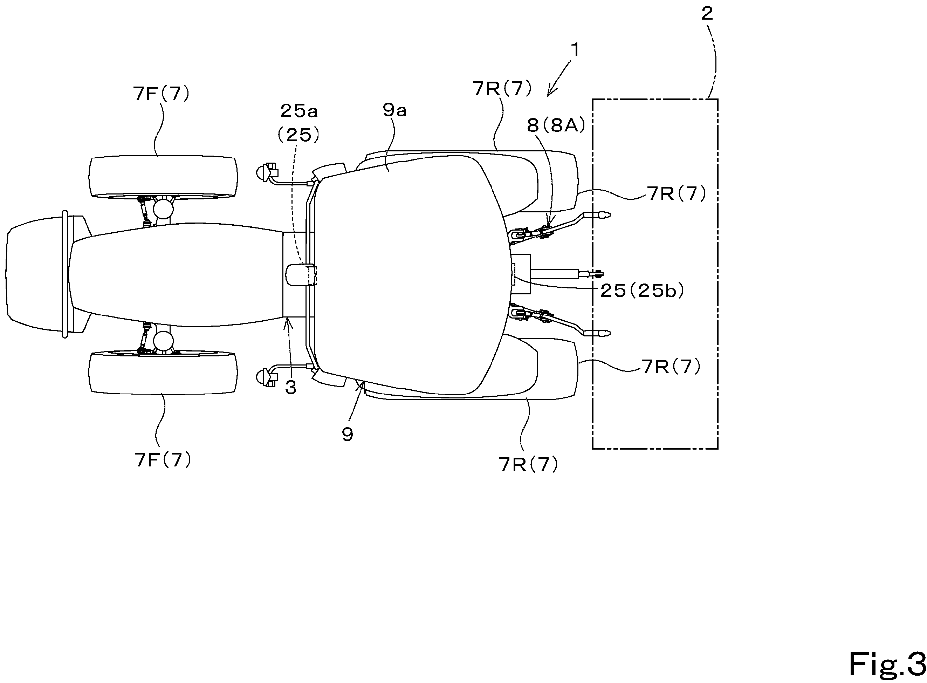

FIG. 2 is a schematic side view of the working machine 1. FIG. 3 is a schematic plan view of the working machine 1. In the following description of the embodiment, the direction (the left-hand portion of FIGS.2 and 3) in which the operator seated on an operator's seat 10 of the working machine 1 faces is referred to as frontward or forward, and the direction (the right-hand portion of FIGS. 2 and 3) opposite to this direction is referred to as rearward. The direction leftward of the operator (the near side of FIG. 2; the lower side of FIG. 3) is referred to as leftward, and the direction rightward of the operator (the far side of FIG. 2; the upper side of FIG. 3) is referred to as rightward. The horizontal direction, which is a direction orthogonal to the front-rear direction, is referred to as width direction.

As illustrated in FIGS. 2 and 3, the working machine 1 includes the traveling vehicle body 3, a prime mover 4, and a transmission 5. The traveling vehicle body 3 includes a traveling device 7. The traveling device 7 provides propelling force to the traveling vehicle body 3 as the traveling device 7 is driven. The traveling device 7 is a wheeled traveling device 7 with at least one front wheel 7F and at least one rear wheel 7R each including a tire. A pair of front wheels 7F are provided in spaced relation in the width direction, and a pair of rear wheels 7R are provided in spaced relation in the width direction. In another example, the traveling device 7 may include the front wheel 7F and the rear wheel 7R that are crawlers. The traveling vehicle body 3 is configured to travel forward and rearward as the traveling device 7 is driven.

The prime mover 4 is incorporated in a front portion of the traveling vehicle body 3. In one example, the prime mover 4 is a diesel engine. In another example, the prime mover 4 may be another internal combustion engine such as a gasoline engine, an electric motor, and/or the like.

The transmission 5 allows speed stages to be changed to speed-change the power output from the prime mover 4. The transmission 5 is thus configured to change the propelling force provided to the traveling device 7, and also change the states of the traveling device 7 (between forward travel and reverse travel of the traveling device 7). The transmission 5 transmits the power from the prime mover 4 to a PTO shaft 6. The PTO shaft 6 is an output shaft to be connected to the working device 2 to drive the working device 2.

A protective structure 9 is provided at an upper portion of the traveling vehicle body 3 to protect the operator's seat 10. The protective structure 9 is, for example, a cabin 9A surrounding the operator's seat 10. The operator's seat 10 is provided inside the cabin 9A. The protective structure 9 is not limited to the cabin 9A but may be a canopy or a ROPS erected at the rear of the operator's seat 10.

The working device 2 is attachable to the traveling vehicle body 3. With the tractor according to the embodiment, the working device 2 is detachably mounted to the traveling vehicle body 3. Specifically, a coupling device 8 is provided at a front portion and/or rear portion of the traveling vehicle body 3 to allow attachment and detachment of the working device 2. FIGS. 2 and 3 illustrate an example where the coupling device 8 is provided at a rear portion of the traveling vehicle body 3. This configuration allows the working machine 1 to, when the working device 2 is coupled to the coupling device 8, tow the coupled working device 2 as the traveling device 7 travels.

FIGS. 2 and 3 illustrate an example where the coupling device 8 is a position changer 8A in the form of a three-point linkage. The position changer 8A is a raising/lowering device that raises or lowers the working device 2 relative to the traveling vehicle body 3 to change the positions of the traveling vehicle body 3 and the working device 2 relative to each other. The position changer 8A in the form of a three-point linkage will now be described in detail.

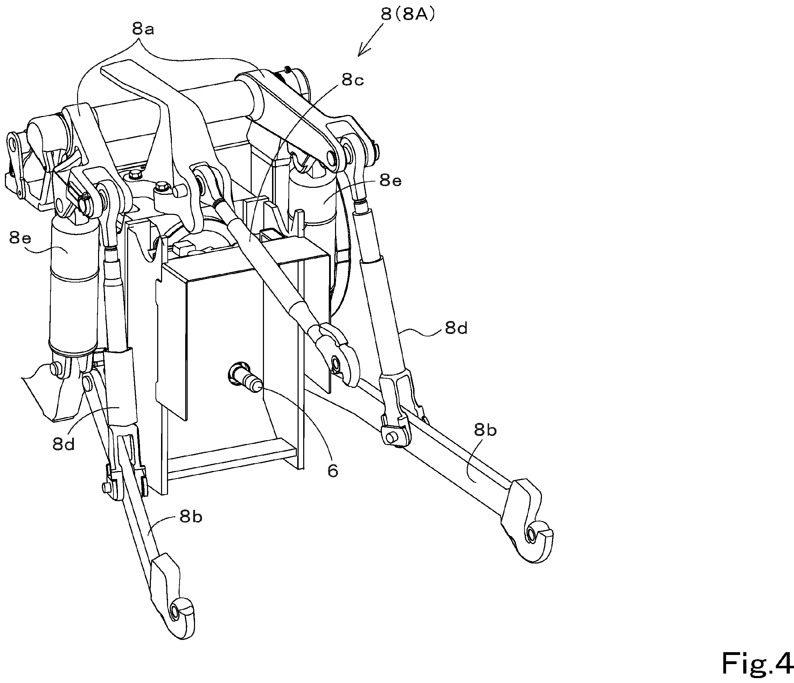

FIG. 4 is a perspective view of the position changer 8A as seen from the rear. The position changer 8A includes lift arm(s) 8a, lower link 8b, a top link 8c, lift rod(s) 8d, and lift cylinder(s) 8e.

The front end portion of the lift arm 8a is supported on an upper rear portion of a case (transmission case) accommodating the transmission 5, such that the front end portion of the lift arm 8a is allowed to swing upward or downward. The lift arm 8a swings (is raised or lowered) as the lift cylinder 8e is driven. The lift cylinder 8e is a hydraulic cylinder. As illustrated in FIG. 1, the lift cylinder 8e is connected to a hydraulic pump via a control valve 34. The control valve 34 is a solenoid valve or the like. The control valve 34 causes the lift cylinder 8e to extend or retract.

The front end portion of the lower link 8b is supported on a lower rear portion of the transmission 5 such that the front end portion of the lower link 8b is allowed to swing upward or downward. At a position above the lower link 8b, the front end portion of the top link 8c is supported on a rear portion of the transmission 5 such that the front end portion of the top link 8c is allowed to swing upward or downward. The lift rod 8d couples the lift arm 8a and the lower link 8b to each other. A rear portion of the lower link 8b, and a rear portion of the top link 8c have a hooked shape.

As the lift cylinder 8e is driven (extended or retracted), the lift arm 8a is raised or lowered, and the lower link 8b coupled to the lift arm 8a via the lift rod 8d is raised or lowered. This allows the working device 2 to swing upward or downward (to be raised or lowered) about a front portion of the lower link 8b.

Although the foregoing description is directed to the example where the coupling device 8 is the position changer 8A in the form of a three-point linkage, the coupling device 8 may be any device configured to at least couple the working device 2 to the traveling vehicle body 3. For example, the coupling device 8 may be in the form of a swinging drawbar or the like that couples the working device 2 and the traveling vehicle body 3 to each other, and that does not change the positions of the working device 2 and the traveling vehicle body 3 relative to each other.

The working device 2 is a device to perform work on a work field H (e.g., the agricultural field H1) or on a work object located in the work field H (e.g., a crop grown in the agricultural field H1). Examples of the working device 2 include: a cultivator for cultivation; a ridge for ridging; a furrow opener for opening furrows; a harvester for harvesting crops; a mower for mowing forage crops or the like; a tedder for tedding forage grass or the like; a rake for raking forage grass or the like; a baler for baling forage grass or the like; a fertilizer spreader for spreading fertilizer; an agricultural chemical spreader for spreading agricultural chemicals; and a separator for separating crops. According to the embodiment, the working device 2 is a ridge for ridging the agricultural field H1.

Although the embodiment is herein described with reference to an exemplary case where the working machine 1 is a tractor and the working device 2 is coupled to the coupling device 8, the working device 2 is not limited to an implement to be coupled to the traveling vehicle body 3 via the coupling device 8. For example, the working device 2 may be a front loader mounted to a front portion of the traveling vehicle body 3.

The working device 2 may be any device that is provided to the working machine 1 and that performs work on the work field H. Accordingly, the working device 2 need not necessarily be a device such as an implement that is detachably attachable to the traveling vehicle body 3. For example, in a case where the working machine 1 is a combine, the working device 2 includes a mower to perform work such as mowing crops. In a case where the working machine 1 is a rice transplanter, the working device 2 includes a planter to plant seedlings. In a case where the working machine 1 is a backhoe or a compact track loader, the working device 2 may be, for example, an attachment to be mounted to the position changer 8A (e.g., an arm or a boom).

As illustrated in FIG. 1, the working machine 1 includes a steering device 11. The steering device 11 includes a steering wheel 11a, a steering shaft 11b (rotary shaft) that rotates as the steering wheel 11a is rotated, and an assist mechanism 11c (power steering mechanism) that assists in the steering of the steering wheel 11a.

The assist mechanism 11c includes a control valve 35, and a steering cylinder 32. The control valve 35 is, for example, a three-position switching valve that can be switched between positions by movement of a spool or the like. The control valve 35 can be also switched between positions by steering of the steering shaft 11b. The steering cylinder 32 is connected to arms (knuckle arms) 36 that change the direction of the front wheel 7F. Thus, when the steering wheel 11a is operated to rotate, the valve position and opening of the control valve 35 are changed in response to the operation, and the steering cylinder 32 extends or retracts to the left or right depending on the valve position and opening of the control valve 35. This allows the steering direction of the front wheel 7F to be changed.

The configuration of the steering device 11 described above is illustrative, and not limited to the above configuration. For example, in a case where the traveling device 7 is configured such that the propelling force at one side in the width direction and the propelling force at the other side in the width direction differ in magnitude to allow changing of the steering angle, the traveling device 7 may also function as the steering device 11.

As illustrated in FIG. 1, the working machine 1 includes a controller 20, and a storing device (memory and/or storage) 21. The controller 20 includes one or more processors. The controller 20 is a controller for the working machine 1, and performs various controls related to the working machine 1. The controller 20 is communicably connected via an in-vehicle network such as CAN, ISOBUS, LIN, or FlexRay to various equipment or devices installed in the working machine 1. For example, based on a signal (operation signal) input from a manual operator, the controller 20 performs a control process (operation) for the working device 2, the prime mover 4, the transmission 5, the position changer 8A, the steering device 11, and the like.

The controller 20 includes one or more memories, various analog circuits, various digital circuits, and the like. The one or more memories store a software program to be executed by the one or more processors, and various data. The controller 20 may be configured to, by means of the one or more processors, read the software program from the one or more processors, and execute various processing based on the software program. The controller 20 may be configured to, by means of the one or more processors, execute various processing based on a predetermined logic circuit.

Examples of such a processor include a central processing unit (CPU), a graphics processing unit (GPU), a digital signal processor (DSP), a field programmable gate array (FPGA), and an application specific integrated circuit (ASIC).

The controller 20 may execute various processing by means of a plurality of physically separate processors cooperating with each other. That is, the controller 20 need not necessarily be configured as described above. In such a case, each of the processors is installed in the corresponding one of one or more computers that are physically separate from the working machine 1, and these processors are communicably connected via a network such as an in-vehicle network, a LAN, a WAN, or the Internet.

In an alternative configuration, the software program may be stored in the storing device 21 (nonvolatile memory such as an HDD an SSD, a CD-ROM, or a DVD-ROM) communicably connected to the controller 20, or in the server 50, which is an external server connected via the above-mentioned network, and may be installed into the above-mentioned memory from the above-mentioned storing device or server.

As illustrated in FIG. 1, the working machine 1 includes one or more sensor assemblies 25. The sensor assembly 25 senses the surrounding area of the working machine 1. Specifically, the sensor assembly 25 performs sensing by measuring the distance to the environment in the surrounding area (an object in the surrounding area) of the working machine 1. The sensor assembly 25 includes a range sensor to perform ranging for at least a portion of the surrounding area of the working machine 1. The sensor assembly 25 is configured to perform ranging for at least a portion of the surrounding area of the working machine 1 to detect point cloud data representing the environment in the surrounding area of the working machine 1.

The sensor assembly 25 is connected to the controller 20 such that the sensor assembly 25 is capable of wired or wireless communication with the controller 20. The sensor assembly 25 outputs sensing results to the controller 20. The sensor assembly 25 includes an optical range sensor, a signal processing circuit, and the like. An example of the optical range sensor of the sensor assembly 25 may be a light detection and ranging (LiDAR) sensor.

A LiDAR sensor (laser sensor) emits pulsed measuring light (laser beam) from a light source such as a laser diode millions of times per second, and scans a predetermined detection range (a sensing range of, for example, 360 degrees) in the horizontal or vertical direction by causing the measuring light to reflect off a rotating mirror onto the detection range. The LiDAR sensor then receives, via a photodetector, light reflected from a target object. The signal processing circuit measures the distance to the target object based on the time taken until the reflection of the measuring beam emitted by the LiDAR sensor is received (time of flight (ToF) method).

An example of the optical range sensor of the sensor assembly 25 other than a LiDAR sensor may be a ToF camera. Although the above example is directed to the case where the sensor assembly 25 includes an optical range sensor, an acoustic range sensor (e.g., a sonar or other airborne ultrasonic acoustic sensor) may be used instead of an optical range sensor.

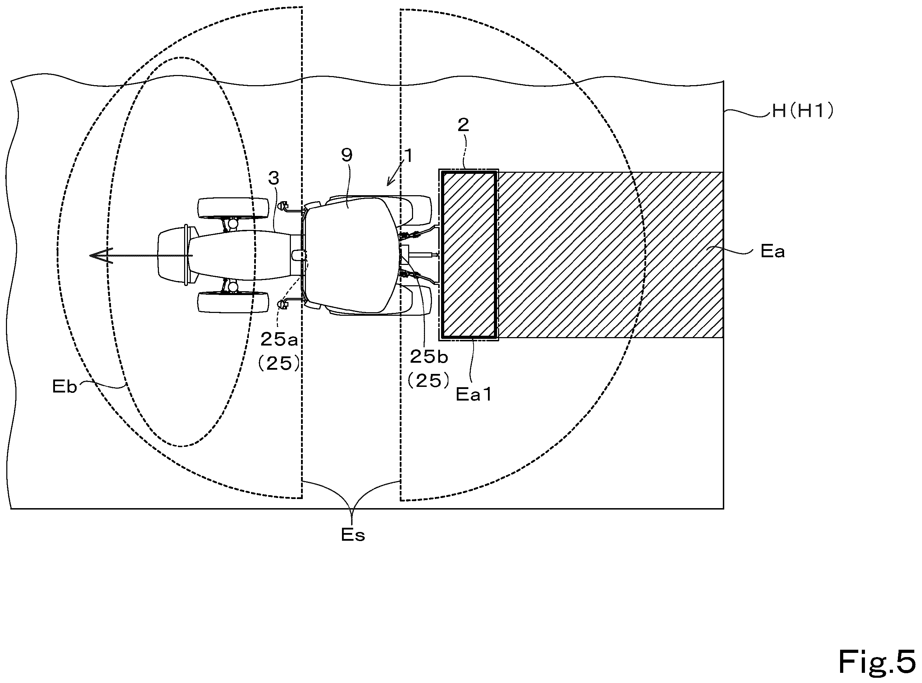

FIG. 5 illustrates an example of a sensing range Es to be sensed by one or more sensor assemblies 25 provided to the working machine 1. The one or more sensor assemblies 25 provided to the working machine 1 sense the sensing range Es. The sensing range Es includes at least a worked region Ea where the working machine 1 (the working device 2) has already performed work. The sensor assembly 25 also senses a position estimation range Eb, which is a range required for estimating the position of the working machine 1 to which the sensor assembly 25 is provided. An example of the position estimation range Eb may be a range in the direction of travel of the working machine 1.

FIG. 5 is merely an illustrative example of the sensing range Es. The sensing range Es, the worked region Ea, and the position estimation range Eb are not limited to those illustrated in FIG. 5. The distance that can be sensed by the sensor assembly 25 varies also depending on the range sensor to be used as the sensor assembly 25.

The working machine 1 performs work while traveling. Thus, a working range Ea1, which is an area that can be worked by the working machine 1 (area worked by the working device 2 of the working machine 1 at a predetermined position), moves as the working machine 1 travels. The working range Ea1 is, when the working machine 1 performs work while traveling, an area worked by the working device 2 at a predetermined position, in other words, at a predetermined point in time. That is, the working range Ea1 means an area where the working machine 1 at a predetermined position (point in time) acts on a target object (such as the agricultural field H1, a crop grown in the agricultural field H1, or weed in the agricultural field H1).

Thus, it can be said that the area left behind as the working range Ea1 moves following the movement of the working machine 1 appears as the worked region Ea on the work field H. The working range Ea1 corresponding to the current position of the working machine 1 is included in part of the worked region Ea. In other words, the working range Ea1 does not mean the entire range where a series of work operations to be performed by the working machine 1 in the work field H (the agricultural field H1) are performed.

Although the example in FIG. 5 depicts, for convenience of explanation, the working range Ea1 that has a rectangular or substantially rectangular shape in plan view, the shape of the working range Ea1 is not limited to this shape. The working range Ea1 differs depending on the type of the working device 2 or the kind of work to be performed by the working device 2, and thus may have a circular or substantially circular shape or an irregular shape. The working range Ea1 also differs depending on what object (where) the working device 2 performs work. That is, in a case where, as with a cultivator, a ridger, or a mower, the working device 2 performs work on the ground of the agricultural field H1, the working range Ea1 is located on the ground of the agricultural field H1. The worked region Ea thus refers to a region on the ground of the agricultural field H1 where the working device 2 has performed work. In a case where, as with a harvester for a fruit from a fruit tree, the working device 2 performs work on a work object other than the ground of the agricultural field H1, the working range Ea1 is located on the work object other than the ground, such as the fruit tree. The worked region Ea thus refers to a region where the working device 2 has performed work on such a work object. According to the embodiment, the working device 2 is a ridger, and the worked region Ea thus includes the ridge M1 formed by the ridger.

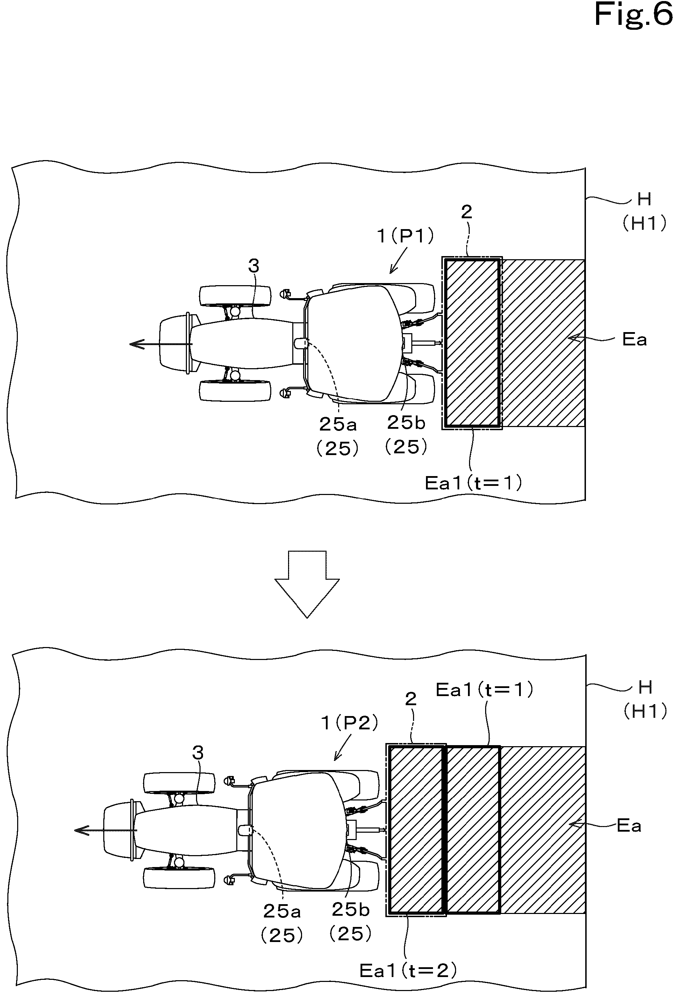

FIG. 6 illustrates the worked region Ea. Now, irrespective of how the working device 2 is positioned with respect to the working machine 1, when the working machine 1 performs work while traveling in a predetermined direction of travel, the working machine 1 moves away from the location that has already been worked on as the working machine 1 travels in the direction of travel. Thus, when the working machine 1 performs work at a predetermined first position P1, and then moves ahead in the direction of travel from the first position P1, the sensor assembly 25 mounted to the working machine 1 moves away from the working range Ea1 corresponding to the first position P1.

In so doing, as seen from the sensor assembly 25, the working machine 1 and/or the working device 2 pass through at least a portion of the working range Ea1 (t = 1) corresponding to the first position P1, and thus at a predetermined second position P2 located ahead of the first position P1 in the direction of travel, at least a portion of the working range Ea1 (t = 1) appears from behind the working machine 1 and/or the working device 2. In the example in FIG. 6, as the working machine 1 moves ahead (forward) in the direction of travel to the second position P2, the working range Ea1 (t = 1) appears in rear of the working device 2 as seen from the sensor assembly 25. It is thus preferable that one or more sensor assemblies 25 are configured to sense, as the sensing range Es, a range including an area opposite from the area located ahead in the direction of travel.

FIG. 5 illustrates an exemplary case where the working device 2 is mounted to a rear portion of the traveling vehicle body 3 and the sensor assembly 25 senses an area rearward of the working machine 1 and the working device 2. In this case, of the sensing range Es, the range including an area opposite from the area located ahead in the direction of travel is not limited to one located rearward of the working machine 1 and the working device 2. One example of such a case is when the working device 2 is mounted to the traveling vehicle body 3 with the working device 2 being offset in the width direction relative to the traveling vehicle body 3, in other words, when the working range Ea1 is offset in the width direction relative to the traveling vehicle body 3. In this case, of the sensing range Es, the range including an area opposite from the area located ahead in the direction of travel includes the working range Ea1 that is offset in the width direction relative to the traveling vehicle body 3.

According to the embodiment, the working machine 1 travels in the forward direction or the rearward direction. Thus, the sensor assembly 25 is configured to sense, as a range in the surrounding area of the working machine 1, a range including at least an area forward of the working machine 1 and an area rearward of the working machine 1. In the example in FIGS. 2 and 3, the working machine 1 is provided with two sensor assemblies 25, of which one sensor assembly 25 (a first sensor assembly 25a) senses the forward area, and the other sensor assembly 25 (a second sensor assembly 25b) senses the rearward area. For example, the first sensor assembly 25a is provided at a front portion of a roof 9a of the cabin 9A. The second sensor assembly 25b is provided at a rear portion of the roof 9a.

The first sensor assembly 25a masks a region where devices and/or equipment provided to the working machine 1, such as the cabin 9A including the roof 9a, would be otherwise detected. Thus, the first sensor assembly 25a senses a range (e.g., 180 degrees) forward of or substantially forward of the working machine 1, and detects point cloud data of the corresponding sensing range Es.

The second sensor assembly 25b masks a region where devices and/or equipment provided to the working machine 1, such as the cabin 9A including the roof 9a, would be otherwise detected. At this time, the second sensor assembly 25b may acquire the position of the working device 2 coupled to the position changer 8A, and may mask a region where the working device 2 would be otherwise detected. Thus, the second sensor assembly 25b senses a range (e.g., 180 degrees) rearward of or substantially rearward of the working machine 1, and detects point cloud data of the corresponding sensing range Es.

The above-mentioned configuration according to the embodiment allows the first sensor assembly 25a and the second sensor assembly 25b to perform sensing over a 360-degree range or a substantially 360-degree range around the working machine 1. It may suffice that the working machine 1 is provided with one or more sensor assemblies 25, and that the one or more sensor assemblies 25 are configured to sense the surrounding area of the working machine 1. The sensing range Es is not limited to the 360-degree range or substantially 360-degree range around the working machine 1. Further, the mounting position for the sensor assembly 25 is not limited to the above-mentioned position. In FIG. 5, the sensing range Es may include a blind spot, and although the sensing range Es is the 360-degree range or substantially 360-degree range around the working machine 1, the sensing range Es is not limited to such a range. According to the embodiment, the working device 2 is a ridger. Thus, the sensing range Es may simply be a range that allows detection of at least the formed object M (e.g., the ridge M1). Although the sensing range Es in this case is a range that is located at the same side of the working machine 1 as where the working device 2 is placed, and that covers, for example, 180 degrees or substantially 180 degrees in the rearward direction around the working machine 1, the sensing range Es may instead cover 90 degrees or the like in the rearward direction around the working machine 1. That is, the range covered by the sensing range Es is not limited to such values. The second sensor assembly 25b acquires point cloud data at least representing one or more geographical features in the surrounding area of the working device 2. More specifically, the second sensor assembly 25b acquires point cloud data representing one or more geographical features of the agricultural field H1 including the ridge M1 formed by the working device 2 (ridger).

As illustrated in FIG. 1, the working machine 1 includes an imager 26. The imager 26 is a charge coupled device (CCD) camera incorporating a CCD image sensor, a complementary metal oxide semiconductor (CMOS) camera incorporating a CMOS image sensor, or the like. The imager 26 is provided at a rear portion of the roof 9a. The imager 26 captures an image of an area rearward of the working machine 1, and the captured image includes the ridge M1 formed by the working device 2 (ridger) on the agricultural field H1. The second sensor assembly 25b and the imager 26 are placed at a rear portion of the roof 9a and side by side in a vertical or horizontal or substantially vertical or horizontal direction in proximity to each other. Thus, the point cloud data of the sensing range Es detected by the second sensor assembly 25b, and the image captured by the imager 26 are obtained from the same or substantially the same measuring point (viewpoint).

In a case where a ROPS is provided as the protective structure 9, a single sensor assembly 25 may be provided at an upper portion of the ROPS. A pair of sensor assemblies 25 may be provided to a mounting structure that is extended outward in the width direction of the traveling vehicle body 3 from each of front and rear portions of the traveling vehicle body 3, such that at each of the front and rear portions of the traveling vehicle body 3, the sensor assemblies 25 are placed at positions spaced apart outward in the width direction from the traveling vehicle body 3. Further, one or more sensor assemblies 25 may be provided to the working device 2 that is detachably attached to the traveling vehicle body 3. The second sensor assembly 25b and the imager 26 are placed at an upper portion of the ROPS and side by side in the vertical or horizontal or substantially vertical or horizontal direction in proximity to each other.

As illustrated in FIG. 1, the evaluation system S of the working machine 1 includes the position estimator 20a to estimate the position of the working machine 1 based on sensing results obtained from the sensor assembly 25. In one example, the position estimator 20a is a software program implemented on the controller 20. In another example, in a case where the working machine 1 is connected to an information processor such as the external server 50 such that the working machine 1 is directly or indirectly communicable with the information processor, the position estimator 20a may be provided in the external server 50 or the like external to the working machine 1. Hereinafter, an exemplary case will be described in which the position estimator 20a is provided in the controller 20 (the working machine 1), and other examples will not be described in detail.

The position estimator 20a estimates the position of the working machine 1 based on sensing results obtained from the sensor assembly 25 and environmental map information. The position estimator 20a estimates the position based on the sensing results obtained from the sensor assembly 25 (a range signal obtained from the range sensor), the environmental map information, and a simultaneous localization and mapping (SLAM) algorithm.

The environmental map information is map information indicating an object present in the surrounding environment of the work field H including the work field H where the working machine 1 performs work. The environmental map information is generated based on point cloud data. By way of example, a case is now described where the work field H is the agricultural field H1 and the environmental map information represents the surrounding environment of the agricultural field H1 including the agricultural field H1. In this case, the environmental map information represents, in the form of a three-dimensional point cloud, the ground in the surrounding area of the agricultural field H1, a crop grown in the agricultural field H1, the ridge M1 formed on the agricultural field H1, a furrow around the agricultural field H1, a fence enclosing the agricultural field H1, weed growing on the ground in the surrounding area of the agricultural field H1, and a barn located in the surrounding area of the agricultural field H1. The environmental map information is generated in advance based on the sensing results obtained from the sensor assembly 25, and stored in the storing device 21. The environmental map information to be stored in the storing device 21 may be one generated based on sensing results obtained from the sensor assembly 25 of another working machine 1 or the like.

In estimating the position of the working machine 1, the position estimator 20a acquires point cloud data (detection-point cloud data) from sensing results obtained from the sensor assembly 25 of the working machine 1, and positions (matches) the acquired detection-point cloud data with respect to the point cloud data of the environmental map information to estimate the position of the working machine 1. In estimating the position of the working machine 1, the position estimator 20a estimates a predetermined position on the working machine 1.

The position estimator 20a may perform estimation (position estimation) of the position (an estimated position EP) of the working machine 1 (the traveling vehicle body 3) with reference to the position of a position detector 27, which is detected by the position detector 27 itself by using a satellite positioning system (positioning satellite) such as D-GPS, GPS, GLONASS, BeiDou, Galileo, or Michibiki, that is, with reference to the position (e.g., the latitude and the longitude) of a GPS antenna. In this case, the position estimator 20a may be configured to use the position (e.g., the latitude and the longitude) of the position detector 27 detected by the position detector 27 itself, and not use the sensing results obtained from the sensor assembly 25 and the environmental map information.

As illustrated in FIG. 1, the controller 20 includes the automatic operation controller 20b. The automatic operation controller 20b includes an electric/electronic circuit provided to the controller 20, the CPU, a program stored in the memory, and the like.

The automatic operation controller 20b controls the automatic operation of the working machine 1 (hereinafter referred to as "automatic operation control"). The automatic operation controller 20b is configured to perform both a line-based automatic operation control and/or an autonomous-type automatic operation control. In the case of line-based automatic operation control, the automatic operation controller 20b controls various constituent equipment and devices of the working machine 1 based on the estimated position EP and based on a predefined planned travel route L, such that the traveling vehicle body 3 travels along the planned travel route L. For example, the automatic operation controller 20b controls, as part of the automatic operation control, the steering angle and travel speed (vehicle speed) of the traveling vehicle body 3.

The planned travel route L may be pre-sored in the storing device 21, or may be created (defined) based on the estimated position EP estimated by the position estimator 20a during actual travel of the working machine 1. The planned travel route L may be created based on information input via an input interface.

The input interface is, for example, a display 15 provided to the working machine 1 and configured to accept an input operation. In addition to a display screen displaying a screen, the display 15 includes, for example, a touchpad or a hardware switch. The input interface may be any input interface configured to accept an input operation for information and allow the input information to be acquired by the controller 20. The input interface may be a terminal that can be operated, such as a smartphone, and that is communicably connected to the controller 20. The input interface may be a communicator configured to communicate with the external server 50 or the like, and the communicator may receive the planned travel route L managed by the external server 50 or the like.

The automatic operation controller 20b controls the steering angle during automatic operation control, such that the positional deviation between the estimated position EP and the planned travel route L is less than a threshold. That is, when the positional deviation between the estimated position EP and the planned travel route L is less than the threshold, the automatic operation controller 20b controls the control valve 35 of the steering device 11 to maintain the steering angle. When the positional deviation between the estimated position EP and the planned travel route L is equal to or greater than the threshold, the automatic operation controller 20b controls the control valve 35 of the steering device 11 to change the steering angle such that the positional deviation decreases.

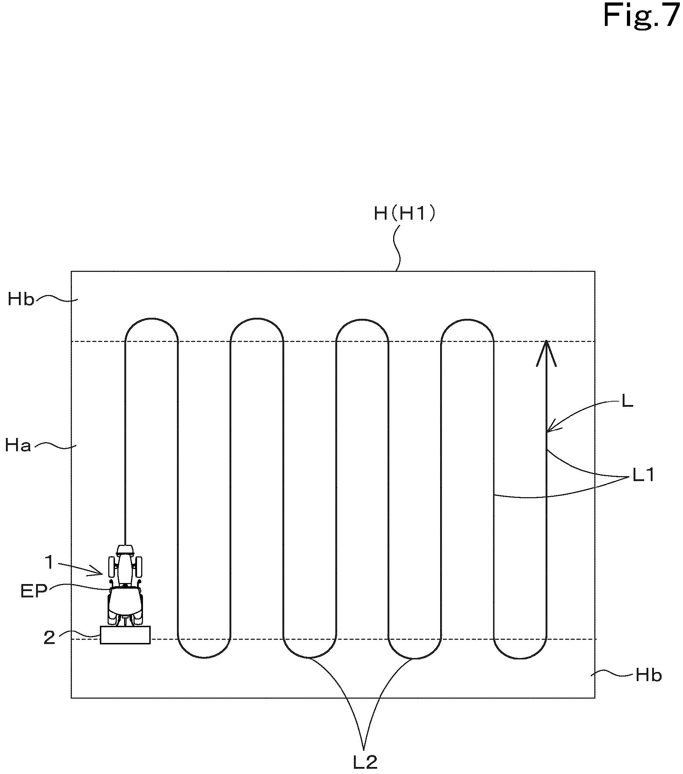

An automatic operation control will now be described with reference to a case where the working machine 1 performs work within the agricultural field H1. The automatic operation controller 20b performs, for example, an automatic operation control such that the working machine 1 travels back and forth between one end and the other end of the work field H (the agricultural field H1). FIG. 7 illustrates the planned travel route L. As illustrated in FIG. 7, the planned travel route L on the agricultural field H1 includes at least one straight section L1, and at least one turn section L2. The straight section L1 extends from one edge of the agricultural field H1 to the opposite edge. The turn section L2 connects one straight section L1 and another straight section L1.

The automatic operation controller 20b may, based on the position and/or the like of the working machine 1 on the planned travel route L, control the working device 2 and/or the position changer 8A to control the work performed by the working device 2. The automatic operation controller 20b is configured to control the execution and stoppage of the work performed by the working device 2. The automatic operation controller 20b enables switching between the working state in which the working device 2 performs work and the non-working state in which the working device 2 does not perform work, by controlling the drive of the position changer 8A (raising/lowering device) and/or the drive of the PTO shaft 6.

The switching mentioned above will now be described with reference to an exemplary case where, as with a cultivator or a ridger, the working device 2 is configured to be towed by the working machine 1 to perform work while making contact with or digging into the ground. In this case, the automatic operation controller 20b is configured to switch the working device 2 to the working state by causing the position changer 8A to lower the working device 2 onto the ground, and switch the working device 2 to the non-working state by causing the position changer 8A to raise the working device 2 from the ground.

In a case where, as with a rotary tiller or a baler, the working device 2 is configured to be driven by power transmitted from the PTO shaft 6 or driven by a built-in actuator (e.g., an electric actuator), the automatic operation controller 20b is configured to switch between the working state and the non-working state by controlling such a power source (the PTO shaft 6, the actuator, or the like).

The automatic operation controller 20b is configured to, for example, switch to the working state when the estimated position EP is located in the straight section L1, and switch to the non-working state when the estimated position EP is located in the turn section L2.

The switching between the working state and the non-working state may be performed by the automatic operation controller 20b based not on the estimated position EP along the planned travel route L, but on a region defined within the agricultural field map. For example, a region where work is performed (a work region Ha) is defined as a region of the agricultural field H1 located inward of the headland. A region where work is not performed (a non-work region Hb) is defined as a region of the agricultural field H1 such as the headland, the entrance/exit of the agricultural field H1, and/or an area that has already been worked on. The work region Ha and the non-work region Hb are merely illustrative. In another example, the work region Ha may include the headland.

The automatic operation according to the embodiment has been described above by way of example of the line-based automatic operation control. In the case of the autonomous-type automatic operation control, the automatic operation controller 20b controls various constituent equipment and devices of the working machine 1 such that work is performed within the agricultural field H1, based not on the planned travel route L but on the estimated position or sensing results.

The working machine 1 may include the display 15 that, based on the estimated position EP estimated by the position estimator 20a and based on the agricultural field map representing the agricultural field H1, displays the current position of the working machine 1 on the agricultural field map. The display 15 may be a display placed in the surrounding area or the like of the operator's seat 10 of the working machine 1, or may be a mobile terminal carried by the operator, or an administrator terminal or the like that monitors the work being performed by the working machine 1. Examples of the mobile terminal and the administrator terminal may include terminals such as smartphones (multi-function mobile phones), tablet computers, or PDAs, and stationary computers such as personal computers.

The working machine 1 includes a communicator 29. The communicator 29 is a communication module to communicate either directly or indirectly with the server 50. For example, the communicator 29 is configured to perform wireless communication via Wi-Fi (Wireless Fidelity) (registered trademark) based on the IEEE 802.11 series, which is a communication standard, Bluetooth Low Energy (BLE) (registered trademark), Low Power, Wide Area (LPWA), and Low-Power Wide-Area Network (LPWAN). The communicator 29 is configured to, for example, perform wireless communication via a mobile phone network or a data communication network.

The server 50 includes a communicator 51, and a storing device (memory and/or storage) 52. Similarly to the communicator 29, the communicator 51 is a communication module to communicate with the working machine 1 either directly or indirectly. The communicator 51 is configured to, for example, perform wireless communication via a mobile phone network or a data communication network. The storing device 52 is, for example, a hard disk drive (HDD) or a solid state drive (SSD).

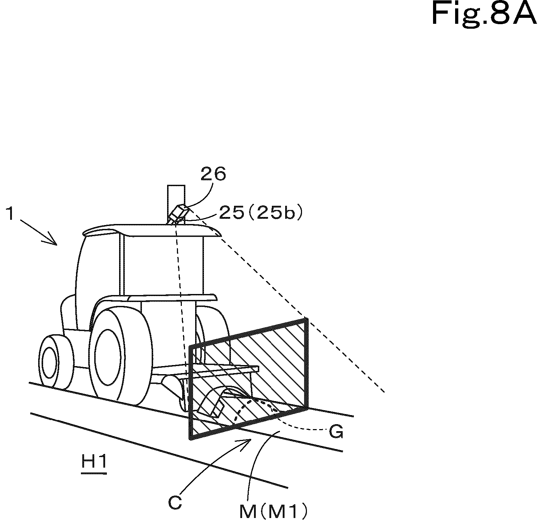

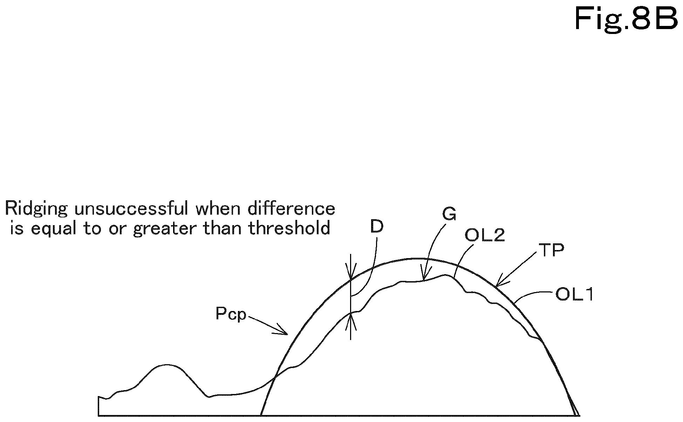

As illustrated in FIG. 1, the evaluation system S of the working machine 1 includes the arithmetic processor 20c. FIG. 8A illustrates an example of acquisition of a cross-sectional image G of a geographical feature from point cloud data obtained through rear sensing by the working machine 1 while ridging is performed. FIG. 8B illustrates an example of matching between the cross-sectional image G and a template image TP. The arithmetic processor 20c evaluates the shape of the formed object M (e.g., the ridge M1) formed by the working device 2 on the agricultural field H1, based on matching between the template image TP and the cross-sectional image G of a geographical feature including the formed object M. For example, as the processor of the controller 20 executes an evaluation program, the controller 20 functions as the arithmetic processor 20c. The arithmetic processor 20c is, for example, a software program implemented on the controller 20. In a case where the working machine 1 is connected to the external server 50 or the like such that the working machine 1 is directly or indirectly communicable with the external server 50 or the like, the arithmetic processor 20c may be provided in the external server 50 or the like external to the working machine 1. Hereinafter, an exemplary case will be described in which the arithmetic processor 20c is provided in the controller 20 (the working machine 1), and other cases will not be described in detail.

FIG. 8A illustrates an example of acquisition of the cross-sectional image G of a geographical feature from point cloud data obtained through rear sensing by the working machine 1 while ridging is performed. As illustrated in FIG. 8A, the arithmetic processor 20c acquires a geographical feature image C representing the geographical feature including the formed object M, and generate the cross-sectional image G from the geographical feature image C. The formed object M is, for example, the ridge M1, and has an elongated shape in plan view. As illustrated in FIG. 8A, the cross-sectional image G is a cross-sectional image of the geographical feature image C taken along a plane (substantially) perpendicular to the longitudinal direction of the formed object M (e.g., the ridge M1). Although the formed object M is depicted in FIG. 8A as the ridge M1 having a semi-cylindrical shape, the formed object M may have a shape other than a semi-cylindrical shape, such as a trapezoidal shape.

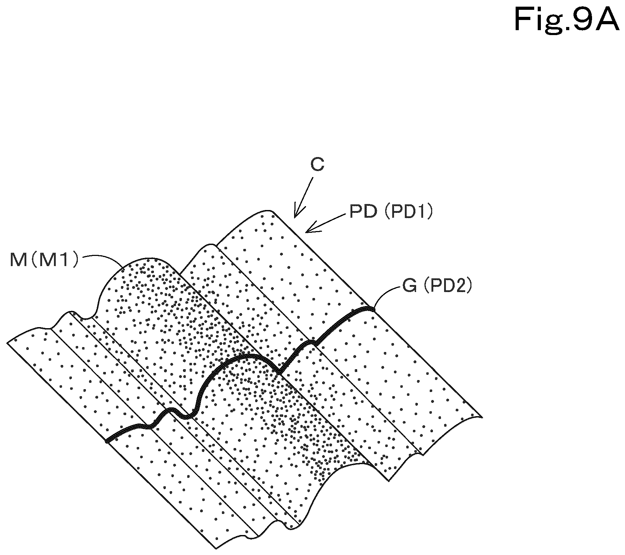

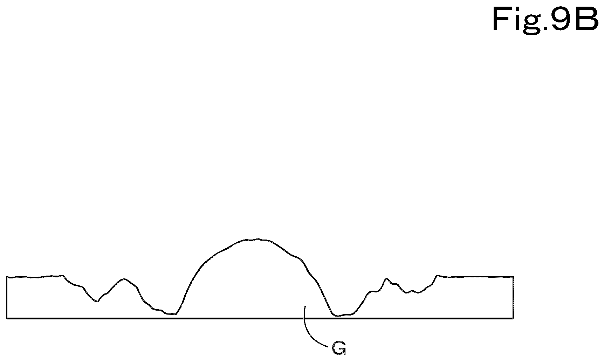

Specifically, as illustrated in FIG. 8A, the second sensor assembly 25b (the sensor assembly 25) acquires, as the geographical feature image C, point cloud data representing one or more geographical features in the surrounding area of the working device 2 (e.g., a ridger). FIG. 9A illustrates point cloud data PD (geographical feature image C) representing one or more geographical features including the ridge M1 having a semi-cylindrical shape. As illustrated in FIG. 9A, the second sensor assembly 25b acquires the point cloud data PD representing the geographical feature image C, which represents a geographical feature (e.g., a geographical feature including the ridge M1 having a semi-cylindrical shape) in the surrounding area of the working device 2 (e.g., a ridger). The arithmetic processor 20c generates the cross-sectional image G (see FIG. 9B) from the point cloud data PD (see FIG. 9A) representing the one or more geographical features including the ridge M1.

In FIG. 9A, the thick line (the line perpendicular to the longitudinal direction of the ridge M1) represents the location where the point cloud data PD is to be sectioned. FIG. 9B illustrates an example of the cross-sectional image G of the point cloud data PD illustrated in FIG. 9A taken along the thick line. As illustrated in FIG. 9B, the cross-sectional image G taken along the thick line in FIG. 9A is an image representing a transverse section similar to a thin slice of the ridge M1 having a semi-cylindrical shape. In one non-limiting example, the cross-sectional image G has a thickness (the thickness of the thick line in FIG. 9A) of, for example, 10 cm, and a transverse width (substantially equal to the length of the thick line in FIG. 9A) of, for example, 2 m.

Under a situation where ground work is being performed, the imager 26 may capture an image of the ground working condition representing the condition of the ground work being performed. For example, the imager 26 may acquire an image of a geographical feature in the surrounding area of the working device 2 (e.g., a ridger) (i.e., a geographical feature including the ridge M1).

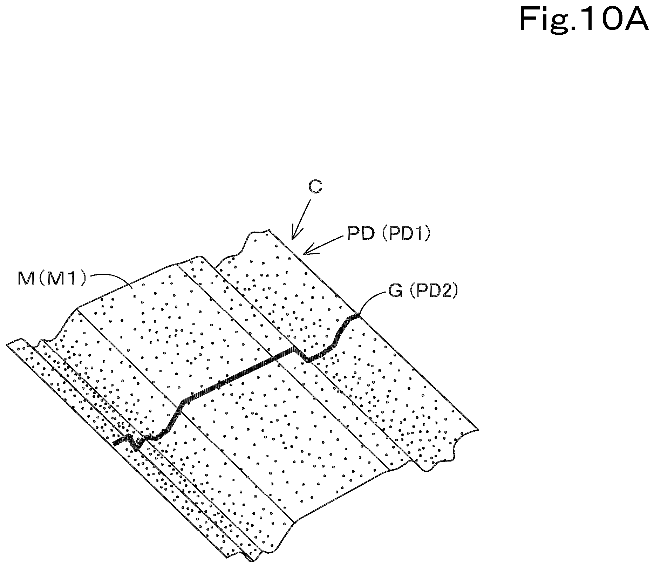

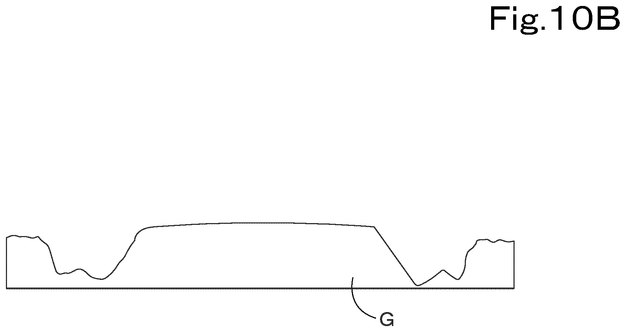

A case where the ridge M1 has a trapezoidal shape will now be described with reference to FIGS. 10A to 10C. FIG. 10A illustrates point cloud data PD (geographical feature image C) representing one or more geographical features including the ridge M1 having a trapezoidal shape. In the case in FIG. 10A, the second sensor assembly 25b acquires point cloud data PD representing the geographical feature image C, which represents a geographical feature (e.g., a geographical feature including the ridge M1 having a trapezoidal shape) in the surrounding area of the working device 2 (e.g., a ridger). The arithmetic processor 20c generates the cross-sectional image G (see FIG. 10B) from the point cloud data PD (see FIG. 10A) representing the one or more geographical features including the ridge M1.

In FIG. 10A, the thick line (the line perpendicular to the longitudinal direction of the ridge M1) represents the location where the point cloud data PD is to be sectioned. FIG. 10B illustrates an example of the cross-sectional image G of the point cloud data PD illustrated in FIG. 10A taken along the thick line. As illustrated in FIG. 10B, the cross-sectional image G taken along the thick line in FIG. 10A is an image representing a transverse section similar to a thin slice of the ridge M1 having a trapezoidal shape. A description of how the arithmetic processor 20c generates the cross-sectional image G from the point cloud data PD will be given later.

The template image TP illustrated in FIG. 8B and the like will now be described. The template image TP is an estimated image representing the shape of the formed object M (e.g., the ridge M1) that is estimated to be formed by the working device 2. The arithmetic processor 20c defines the template image TP according to the working device 2. Specifically, the arithmetic processor 20c defines the template image TP according to at least one of the type (e.g., the model) or configuration information (information which determines at least one of ridge height, ridge width, ridge shape, or ridge spacing) of the working device 2.

For example, the arithmetic processor 20c may define the template image TP according to the type (e.g., the model) of the working device 2. If the working device 2 is one of the first to nth models, the template image TP according to the corresponding model is defined. That is, the template image TP with a shape and a size that are specified by the specifications (various dimensional data) of the first to nth models is defined.

The arithmetic processor 20c may define the template image TP according to the configuration information (information for determining at least one of ridge height, ridge width, ridge shape, or ridge spacing) of the working device 2.

In the storing device 21, the following template images TP may be pre-stored as corresponding data: the template image TP corresponding to the type of the working device 2; the template image TP corresponding to the configuration information of the working device 2; and the template image TP corresponding to the type and configuration information of the working device 2. The arithmetic processor 20c is configured to, by using the corresponding data stored in the storing device 21, retrieve and define the template image TP corresponding to at least one of the type (e.g., model) or configuration information of the working device 2.

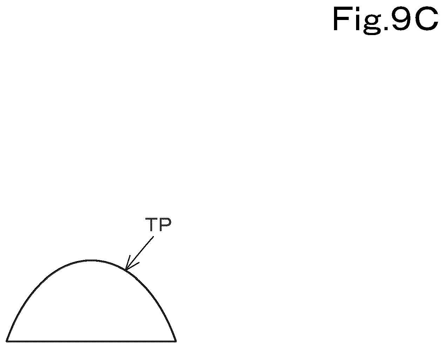

FIG. 9C illustrates an example of the template image TP having a semi-cylindrical shape. If the ridge shape defined in the configuration information is the semi-cylindrical shape in FIG. 9A, the arithmetic processor 20c defines the template image TP (see FIG. 9C) having a shape that matches the semi-cylindrical shape of the configuration information of the working device 2, and having an overall size and dimensions corresponding to at least one of the ridge height, the ridge width, or the ridge spacing defined in the configuration information of the working device 2.

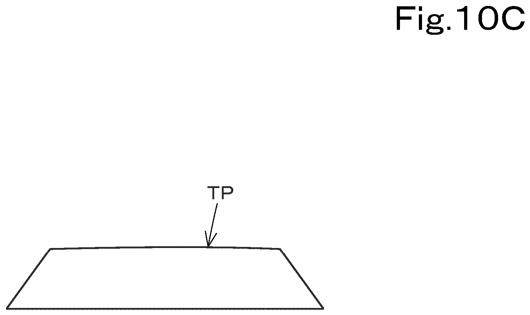

FIG. 10C illustrates an example of the template image TP having a trapezoidal shape. If the ridge shape defined in the configuration information is the trapezoidal shape in FIG. 10A, the arithmetic processor 20c defines the template image TP (see FIG. 10C) having a shape that matches the trapezoidal shape of the configuration information of the working device 2, and having an overall size and dimensions corresponding to at least one of the ridge height, the ridge width, or the ridge spacing defined in the configuration information of the working device 2.

When the user has changed the configuration information (information for determining at least one of ridge height, ridge width, ridge shape, or ridge spacing), the arithmetic processor 20c may compute and define the template image TP identified by the changed configuration information.

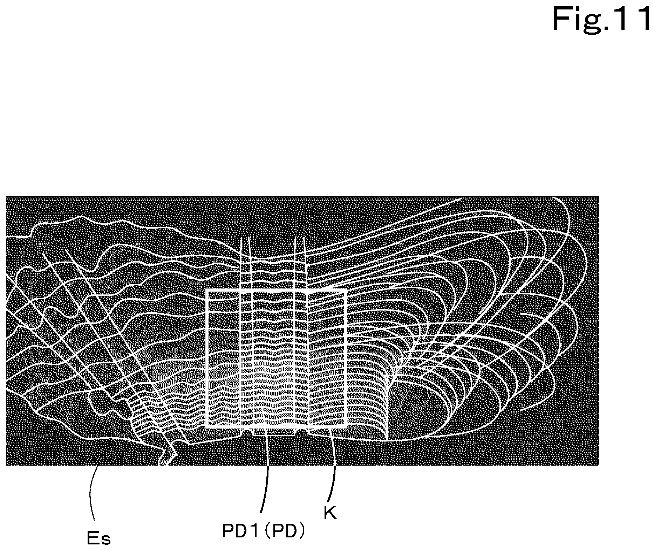

As illustrated in FIG. 8A, the second sensor assembly 25b acquires the point cloud data PD including the formed object M on the agricultural field H1. FIG. 11 illustrates the relationship between a region-of-interest K and all pieces of point cloud data obtained by the second sensor assembly 25b. For the entire sensing range Es in FIG. 11, a very large amount of point cloud data exists (e.g., 450, 000 points per second), and thus processing all the pieces of point cloud data may require considerable computation time, which may compromise real-time performance. Thus, to exclude unnecessary point cloud data, the arithmetic processor 20c defines a region-of-interest K within a range including the ridge M1, and extracts the point cloud data PD of the region-of-interest K. As a result, as for the region-of-interest K, the amount of point cloud data is reduced to about one-half to one-third of the original total amount of point cloud data. The amount of point cloud data may, however, be further reduced.

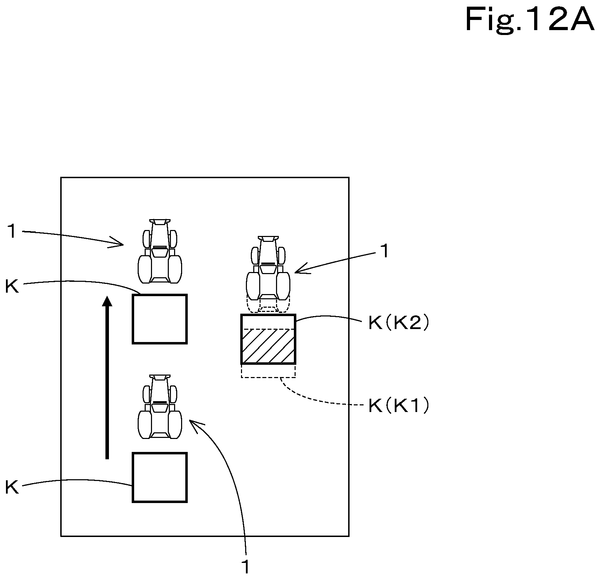

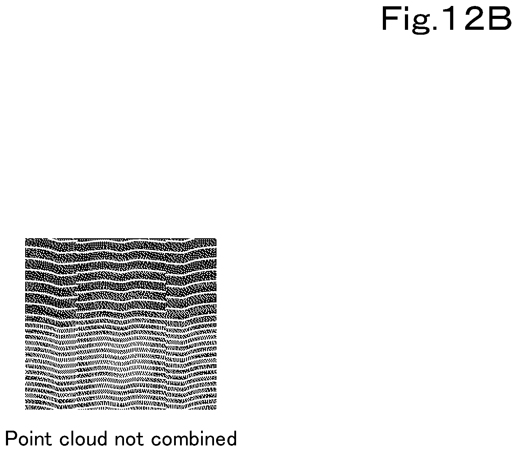

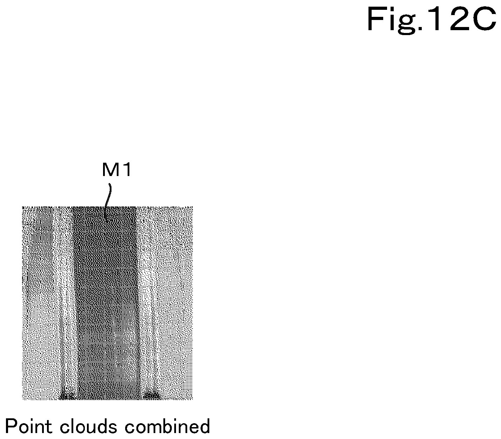

FIG. 12A illustrates movement of the region-of-interest K associated with the movement of a tractor, and superimposition of two regions-of-interest K that differ in terms of the position of the tractor. As illustrated in the left-hand portion of FIG. 12A, as the working machine 1 moves (travels straight ahead), the position of the region-of-interest K moves. As illustrated in the right-hand portion of FIG. 12A, the region-of-interest K corresponding to the position of the working machine 1 at a given point in time (a region K2 represented by a solid line), and the region-of-interest K corresponding to the position of the working machine 1 at a time 0.1 seconds earlier than the given point in time (a region K1 represented by a dashed line) partially overlap (the overlapping portion is represented by hatching). FIG. 12B illustrates an example of point cloud data without superimposition of the regions-of-interest K. The point cloud data without superimposition of the regions-of-interest K illustrated in FIG. 12B, that is, point cloud data from a single region-of-interest K at the given point in time or 0.1 seconds earlier than the given point in time exhibits many horizontal streaks, and the shape of the ridge M1 appears blurred. FIG. 12C illustrates an example of point cloud data with superimposition of the regions-of-interest K. The point cloud data with superimposition of the regions-of-interest K illustrated in FIG. 12C exhibits fewer horizontal streaks, and the shape of the ridge M1 is clearly visible.

The generation of the cross-sectional image G from the point cloud data PD will now be described. The arithmetic processor 20c acquires position information of the point cloud data PD based on position information from the position detector 27 and based on range information from the second sensor assembly 25b (the sensor assembly 25). The arithmetic processor 20c then stores, into the storing device 21, the position information of the point cloud data PD, and extracted point cloud data PD1 (point cloud data PD) extracted from the region-of-interest K of the point cloud data such that the position information of the point cloud data PD and the extracted point cloud data PD1 are associated with each other.

Subsequently, the arithmetic processor 20c converts, based on the position information, each of pieces of extracted point cloud data PD1 (point cloud data PD) of regions-of-interest K (e.g., the regions K1 and K2 in FIG. 12A) into a world coordinate system from the coordinate system of the second sensor assembly 25b (the sensor assembly 25), the regions-of-interest K being different from each other in terms of the position of the traveling vehicle body 3. In this way, the arithmetic processor 20c combines the pieces of extracted point cloud data PD1 of the regions-of-interest K (e.g., the regions K1 and K2 in FIG. 12A) in the world coordinate system. As a result, an amount of extracted point cloud data PD1 (point cloud data PD) corresponding to a predetermined length in the longitudinal direction of the ridge M1 (corresponding to the overlapping length of the regions-of-interest K) is constructed in the world coordinate system (point cloud reconstruction: voxel data of the point clouds). The arithmetic processor 20c generates the cross-sectional image G from sliced point cloud data PD2 with a predetermined thickness (e.g., 10 cm) obtained by slicing, along a plane perpendicular to the direction of travel of the traveling vehicle body 3, the combined pieces of extracted point cloud data PD1 (point cloud data PD) in the world coordinate system. The predetermined thickness may be, for example, a value other than 10 cm.

The arithmetic processor 20c applies spline interpolation to the sliced point cloud data PD2. Through the spline interpolation, the arithmetic processor 20c interpolates scattered points representing a contour of the geographical feature (including a contour of the ridge M1) in the sliced point cloud data PD2 to obtain a curve. The arithmetic processor 20c then generates the cross-sectional image G from the spline-interpolated sliced point cloud data PD2. For example, the contour of the cross-sectional image G in FIG. 8B can be converted into a curve, and the contour thus becomes smoother. The interpolation method is not limited to spline interpolation. For example, a smooth curve may also be created by applying a filter such as a Gaussian filter after performing linear interpolation, cubic interpolation, or nearestneighbor interpolation.

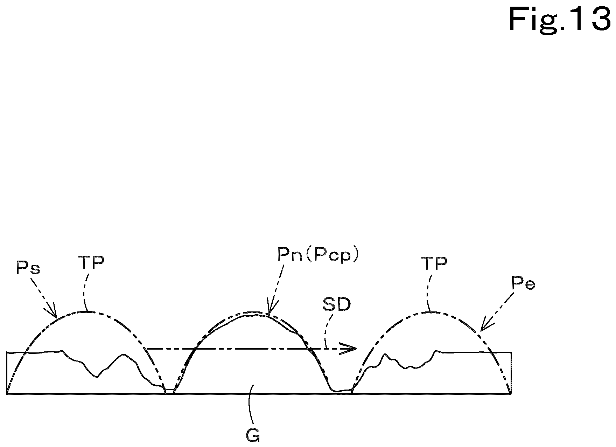

As illustrated in FIGS. 8B and 13, the arithmetic processor 20c evaluates the shape of the ridge M1 based on matching between the template image TP and the cross-sectional image G of a geographical feature including the ridge M1.

FIG. 13 illustrates movement of the template image TP in a scanning direction relative to the cross-sectional image G to identify a position-for-comparison Pcp. As illustrated in FIG. 13, the arithmetic processor 20c superimposes the template image TP on the cross-sectional image G, causes the template image TP to move in a predetermined direction SD (scanning direction), and selects, as a position-for-comparison Pcp, a position at which the area of overlap of the template image TP and a cross section of the formed object M that is included in the cross-sectional image G is largest. As illustrated in FIG. 13, each time the arithmetic processor 20c causes the template image TP to move at a predetermined pitch in the predetermined direction SD from a start position Ps at the left end of the cross-sectional image G to an end position Pe at the right end of the cross-sectional image G, the arithmetic processor 20c sequentially calculates the area of overlap at each position, and stores the calculated area of overlap such that the area of overlap and each position are associated with each other. In the present case, the area of overlap between the template image TP and the cross section of the formed object M in the cross-sectional image G is largest when the template image TP is at a position Pn, and thus the position Pn is selected (determined) as the position-for-comparison Pcp.

In FIG. 13, for example, the predetermined direction SD is the transverse (horizontal) direction only, and the arithmetic processor 20c causes the template image TP to move in a one-dimensional scanning (linear scanning) direction. However, this does not imply any limitation. The predetermined direction SD may include the transverse direction and the vertical direction, and the arithmetic processor 20c may cause the template image TP to move in a two-dimensional scanning (planar scanning) direction.

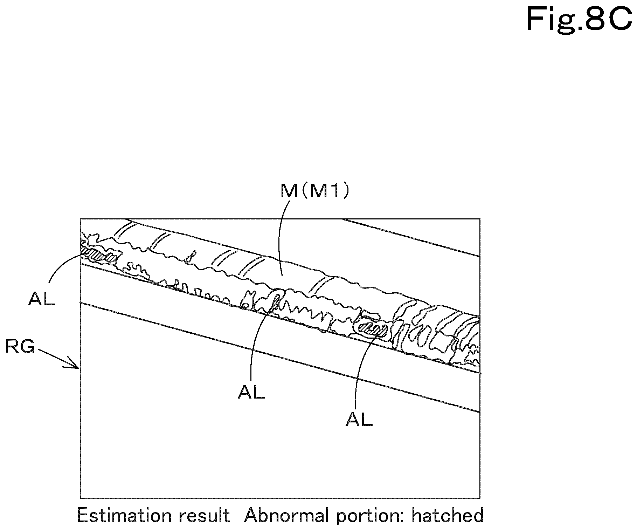

FIG. 8B illustrates an example of matching between the cross-sectional image G and the template image TP. As illustrated in FIG. 8B, the arithmetic processor 20c determines that the formed object M is formed abnormally when a difference D is equal to or greater than a threshold. The difference D is the difference between a contour OL1 of the template image TP at the position-for-comparison Pcp, and a contour OL2 of the cross section of the formed object M. FIG. 8C illustrates an example of the estimation result of abnormal locations obtained through matching. The arithmetic processor 20c may generate an estimation result image RG by adding, to the point cloud data PD illustrated in FIG. 9A or to an image captured by the imager 26, at least one abnormal region AL where the difference D is equal to or greater than a threshold, and cause the display 15 to display the estimation result image RG.

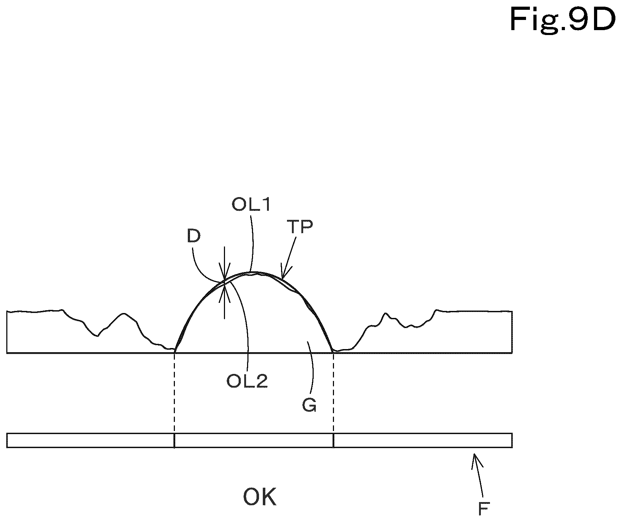

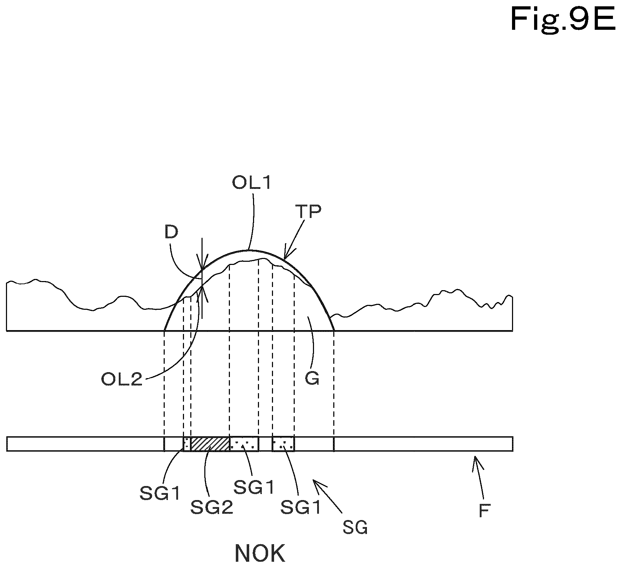

FIG. 9D illustrates an example of a matching relationship and an example of a contour difference image F for a case where the evaluation result for the ridge M1 is OK. FIG. 9E illustrates an example of a matching relationship and an example of the contour difference image F for a case where the evaluation result for the ridge M1 is NOT OK (NOK). In FIGS. 8B and 9E, for example, there is more than one location where the difference D between the contour OL1 of the template image TP and the contour OL2 of the cross section of the formed object M is equal to or greater than a threshold. The arithmetic processor 20c thus determines that ridging has been unsuccessful (the ridge M1 is formed abnormally).

In a case where, as illustrated in FIG. 9D, there is no location where the difference D between the contour OL1 of the template image TP and the contour OL2 of the cross section of the formed object M is equal to or greater than the threshold, then for a portion of the cross-sectional image G corresponding to the ridge M1, the arithmetic processor 20c determines that the ridge M1 is not formed abnormally. In FIG. 9D, the contour OL2 of the cross section of the ridge M1 matches or substantially matches the contour OL1 of the template image TP (more precisely, matches the contour OL1 such that the difference D is less than the threshold). In a case where, for example, for all of the cross-sectional images G of the ridge M1, the arithmetic processor 20c determines that the ridge M1 is not formed abnormally, the arithmetic processor 20c determines that ridging has been successful for the ridge M1.

As illustrated in the lower portion of FIG. 9D and the lower portion of FIG. 9E, the arithmetic processor 20c generates the contour difference image F showing the difference D between the contour OL1 of the template image TP and the contour OL2 of the cross section of the formed object M (the ridge M1). The contour difference image F is an image representing a portion of the cross-sectional image G corresponding to its thickness as seen from above. The contour difference image F represents the difference D between the contour OL2 of the top surface of the cross-sectional image G and the contour OL1 of the top surface of the template image TP. FIG. 9D illustrates the contour difference image F when the ridge M1 is not formed abnormally. FIG. 9E illustrates the contour difference image F when the ridge M1 is formed abnormally.

As illustrated in FIG. 9E, the arithmetic processor 20c indicates, in a specific manner SG, a portion of the contour difference image F in which the difference D is equal to or greater than a threshold. The threshold includes, for example, a first threshold, and a second threshold having a greater value than the first threshold. The arithmetic processor 20c does not indicate a portion of the contour difference image F in which the difference D is equal to or less than the first threshold in the specific manner SG. The arithmetic processor 20c indicates a portion of the contour difference image F in which the difference D is greater than the first threshold and equal to or less than the second threshold in a first specific manner SG1 which is a type of the specific manner SG. The arithmetic processor 20c indicates a portion of the contour difference image F in which the difference D is greater than the second threshold in a second specific manner SG2 which is another type of the specific manner SG different from the first specific manner SG1.

For example, the first specific manner SG1 indicates that the formed object M includes a shape abnormality equal to or less than a predetermined level (a minor abnormality), such as a minor ridge deformation or a minor depression, and that the ridging does not need to be redone. The second specific manner SG2 indicates that the formed object M includes a shape abnormality greater than the predetermined level (a major abnormality), such as a major ridge deformation or a major depression, and that the ridging needs to be redone. For example, if the difference D is equal to or greater than the first threshold and less than the second threshold, a shape abnormality equal to or less than the predetermined level is detected. If the difference D is equal to or greater than the second threshold, a shape abnormality greater than the predetermined level is detected.

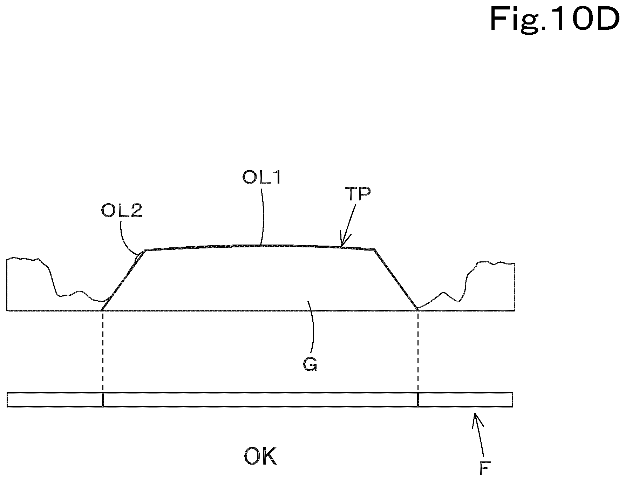

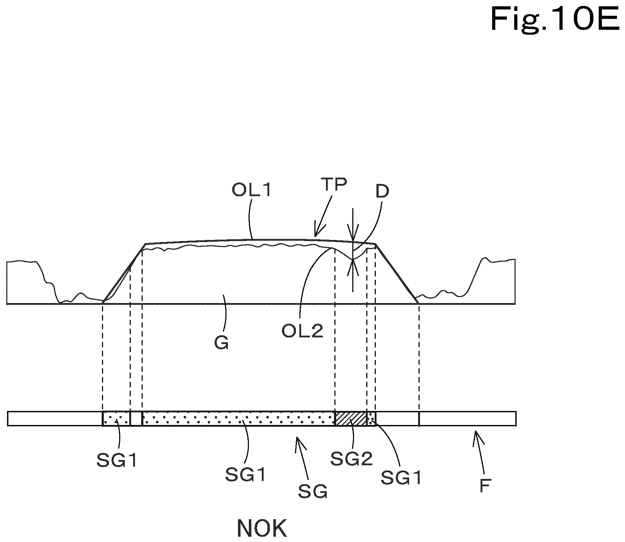

A case where the ridge M1 has a trapezoidal shape will now be described. FIG. 10D illustrates an example of a matching relationship and an example of the contour difference image F for a case where the evaluation result for the ridge M1 is OK. FIG. 10E illustrates an example of a matching relationship and an example of the contour difference image F for a case where the evaluation result for the ridge M1 is NOK. In FIG. 10E, there is more than one location where the difference D between the contour OL1 of the template image TP and the contour OL2 of the cross section of the formed object M is equal to or greater than a threshold. The arithmetic processor 20c thus determines that ridging has been unsuccessful (the ridge M1 is formed abnormally).

In a case where, as illustrated in FIG. 10D, there is no location where the difference D between the contour OL1 of the template image TP and the contour OL2 of the cross section of the formed object M is equal to or greater than the threshold, then for a portion of the cross-sectional image G corresponding to the ridge M1, the arithmetic processor 20c determines that the ridge M1 is not formed abnormally. In FIG. 10D, the contour OL2 of the cross section of the ridge M1 matches or substantially matches the contour OL1 of the template image TP (more precisely, matches the contour OL1 such that the difference D is less than the threshold). In a case where, for all of the cross-sectional images G of the ridge M1, the arithmetic processor 20c determines that the ridge M1 is not formed abnormally, the arithmetic processor 20c determines that ridging has been successful for the ridge M1.

As illustrated in the lower portion of FIG. 10D and the lower portion of FIG. 10E, the arithmetic processor 20c generates the contour difference image F showing the difference D between the contour OL1 of the template image TP and the contour OL2 of the cross section of the formed object M (the ridge M1). The contour difference image F is an image representing a portion of the cross-sectional image G corresponding to its thickness as seen from above. The contour difference image F represents the difference D between the contour OL2 of the top surface of the cross-sectional image G and the contour OL1 of the top surface of the template image TP. FIG. 10D illustrates the contour difference image F when the ridge M1 is not formed abnormally. FIG. 10E illustrates the contour difference image F when the ridge M1 is formed abnormally.

As illustrated in FIG. 10E, the arithmetic processor 20c indicates, in the specific manner SG, a portion of the contour difference image F in which the difference D is equal to or greater than the threshold. The arithmetic processor 20c does not indicate a portion of the contour difference image F in which the difference D is equal to or less than the first threshold in the specific manner SG. The arithmetic processor 20c indicates a portion of the contour difference image F in which the difference D is greater than the first threshold and equal to or less than the second threshold in the first specific manner SG1 which is a type of the specific manner SG. The arithmetic processor 20c indicates a portion of the contour difference image F in which the difference D is greater than the second threshold in the second specific manner SG2 which is another type of the specific manner SG different from the first specific manner SG1.

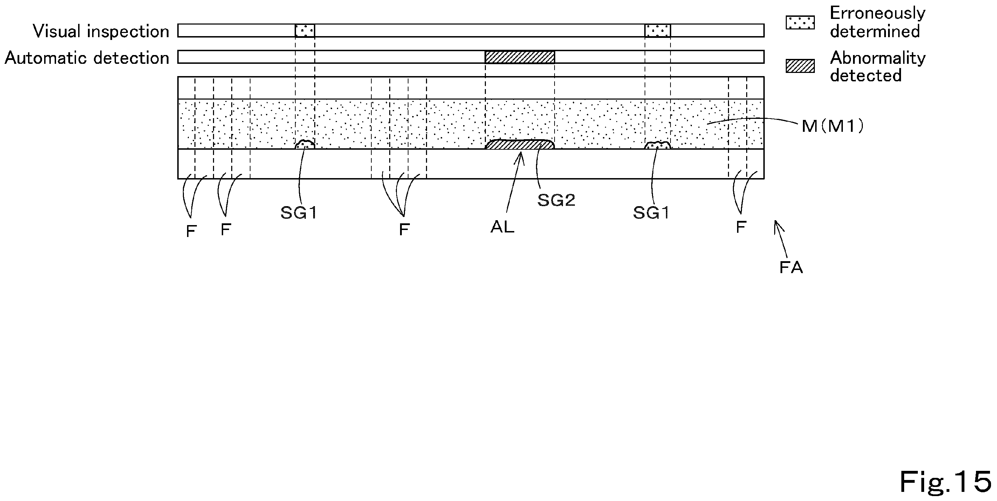

The storing device 21 stores, under control by the arithmetic processor 20c, the contour difference image F and a piece of position information of the contour difference image F such that the contour difference image F and the piece of position information are associated with each other. The arithmetic processor 20c may generate a series difference image FA (see FIG. 15) in which a plurality of the contour difference images F stored in the storing device 21 are arranged in the order of positions of the plurality of contour difference images F based on a plurality of the pieces of position information of the respective plurality of contour difference images F. The storing device 21 may store the speed of the traveling vehicle body 3, the position of the traveling vehicle body 3 acquired by the position detector 27, the working condition of the working device 2, and the contour difference image F such that the speed of the traveling vehicle body 3, the position of the traveling vehicle body 3 acquired by the position detector 27, the working condition of the working device 2, and the contour difference image F are associated with each other.

The controller 20 may transmit the series difference image FA to the server 50 illustrated in FIG. 1. The storing device 52 of the server 50 stores the series difference image FA. The controller 20 may associate the series difference image FA and position information of the formed object M included in the series difference image FA with each other, and transmit the series difference image FA and the position information of the formed object M associated with each other to the server 50. The storing device 52 of the server 50 stores the series difference image FA and the position information of the formed object M included in the series difference image FA such that the series difference image FA and the position information of the formed object M are associated with each other.

The controller 20 may associate the contour difference image F and the position information of the contour difference image F with each other, and transmit the series difference image FA and the position information of the contour difference image F associated with each other to the server 50. The storing device 52 of the server 50 stores the contour difference image F, and the position information of the contour difference image F such that the contour difference image F and the position information of the contour difference image F are associated with each other.

FIG. 15 illustrates, based on the series difference image FA, how evaluation of the shape of a single ridge M1 differs between when the evaluation is performed by visual inspection and when the evaluation is performed by automatic detection. As illustrated in FIG. 15, in the case of automatic detection based on the series difference image FA, the location of a shape abnormality such as ridge deformation (the hatched location in the series difference image FA in FIG. 15) is detected correctly. That is, an abnormality in the shape of the ridge M1 is detected correctly. In contrast, with visual inspection, the location of a shape abnormality such as ridge deformation (the hatched location in the series difference image FA in FIG. 15) is overlooked, and locations that do not amount to a shape abnormality (locations indicated by dots in the series difference image FA in FIG. 15) are determined (erroneously determined) to be abnormal. These observations indicate that automatic detection is superior to visual inspection.

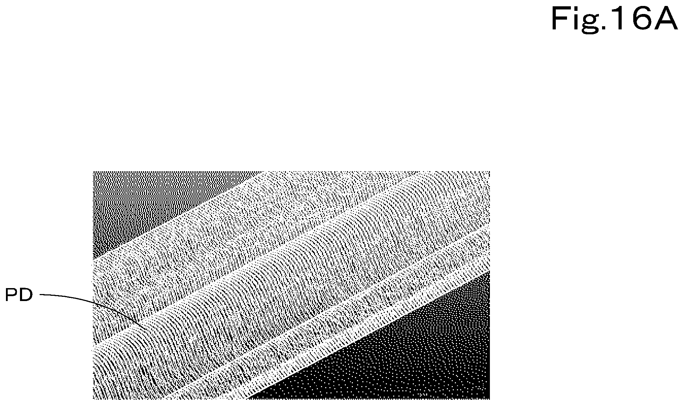

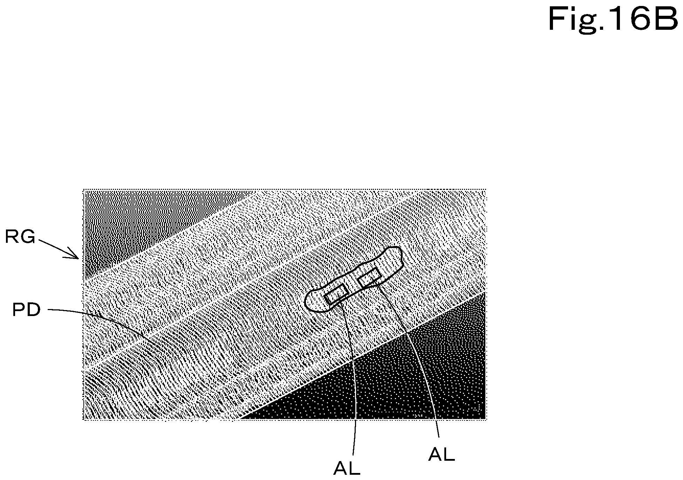

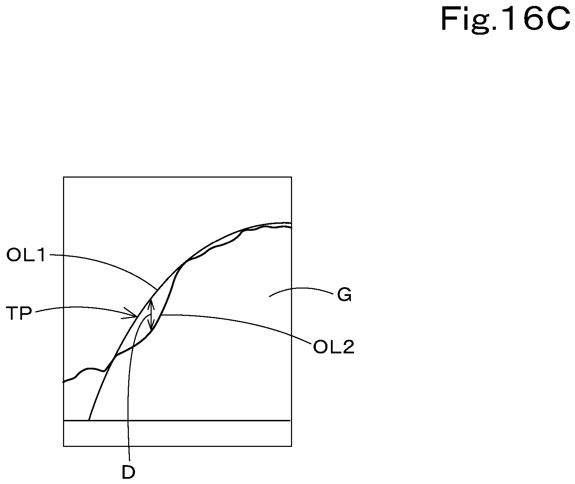

FIG. 16A illustrates point cloud data PD (geographical feature image C) representing the ridge M1 having a semi-cylindrical shape. FIG. 16B illustrates an example of the locations of shape defects in the point cloud data PD (geographical feature image C) illustrated in FIG. 16A. FIG. 16C illustrates an example of a matching relationship between the template image TP and the cross-sectional image G of the location of a defect in the shape of the ridge M1. As illustrated in FIG. 16A, the second sensor assembly 25b acquires the point cloud data PD representing one or more geographical features including the formed object M (the ridge M1 having a semi-cylindrical shape) formed by the working device 2 (e.g., a ridger). The arithmetic processor 20c generates the cross-sectional image G in FIG. 16C from the point cloud data PD (see FIG. 16A) representing the one or more geographical features including the ridge M1.

As illustrated in FIG. 16C, the arithmetic processor 20c determines that the formed object M is formed abnormally when the difference D between the contour OL1 of the template image TP and the contour OL2 of a cross section of the formed object M is equal to or greater than a threshold. The arithmetic processor 20c may generate at least one abnormal region AL representing a region where the formed object M is determined to be formed abnormally, and as illustrated in FIG. 16B, the arithmetic processor 20c may generate the estimation result image RG with the abnormal region AL added to the corresponding position in the point cloud data PD, and cause the display 15 to display the generated estimation result image RG. In the example in FIG. 16C, the difference D between the contour OL1 of the template image TP and the contour OL2 of the cross section of the formed object M is represented by a distance in a vertical or substantially vertical direction. However, this does not imply any limitation. The difference D may be represented by a length in an oblique direction or a horizontal or substantially horizontal direction between the contour OL1 of the template image TP and the contour OL2 of the cross section of the formed object M.

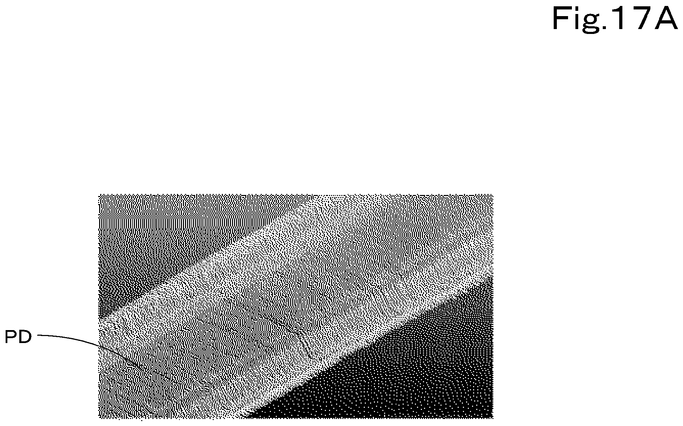

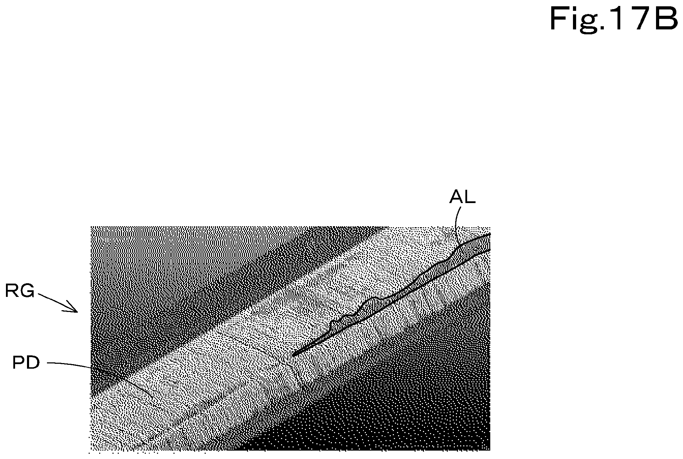

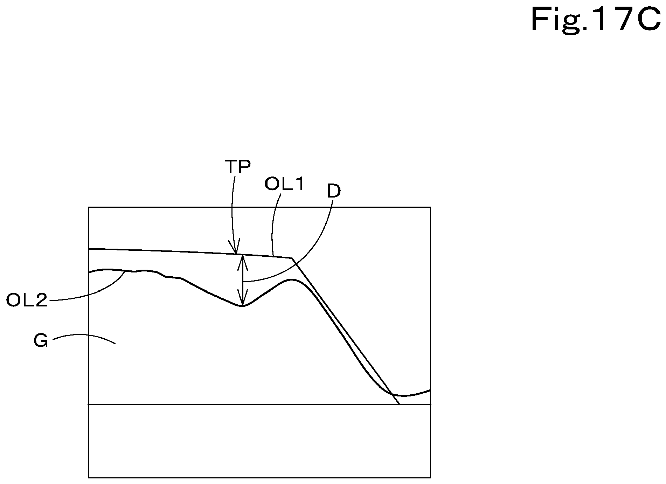

FIG. 17A illustrates point cloud data PD (geographical feature image C) representing the ridge M1 having a trapezoidal shape. FIG. 17B illustrates an example of the location of a shape defect in the point cloud data PD (geographical feature image C) illustrated in FIG. 17A. FIG. 17C illustrates an example of a matching relationship between the template image TP and the cross-sectional image G of the location of a defect in the shape of the ridge M1. As illustrated in FIG. 17A, the second sensor assembly 25b acquires the point cloud data PD representing one or more geographical features including the formed object M (the ridge M1 having a trapezoidal shape) formed by the working device 2 (e.g., a ridger). The arithmetic processor 20c generates the cross-sectional image G in FIG. 17C from the point cloud data PD (see FIG. 17A) representing the one or more geographical features including the ridge M1.

As illustrated in FIG. 17C, the arithmetic processor 20c determines that the formed object M is formed abnormally when the difference D between the contour OL1 of the template image TP and the contour OL2 of a cross section of the formed object M is equal to or greater than a threshold. The arithmetic processor 20c may generate at least one abnormal region AL representing a region where the formed object M is determined to be formed abnormally, and as illustrated in FIG. 17B, the arithmetic processor 20c may generate the estimation result image RG with the abnormal region AL added to the corresponding position in the point cloud data PD, and cause the display 15 to display the generated estimation result image RG. In the example in FIG. 17C, the difference D between the contour OL1 of the template image TP and the contour OL2 of the cross section of the formed object M is represented by a distance in a vertical or substantially vertical direction. However, this does not imply any limitation. The difference D may be represented by a length in an oblique direction or a horizontal or substantially horizontal direction between the contour OL1 of the template image TP and the contour OL2 of the cross section of the formed object M.

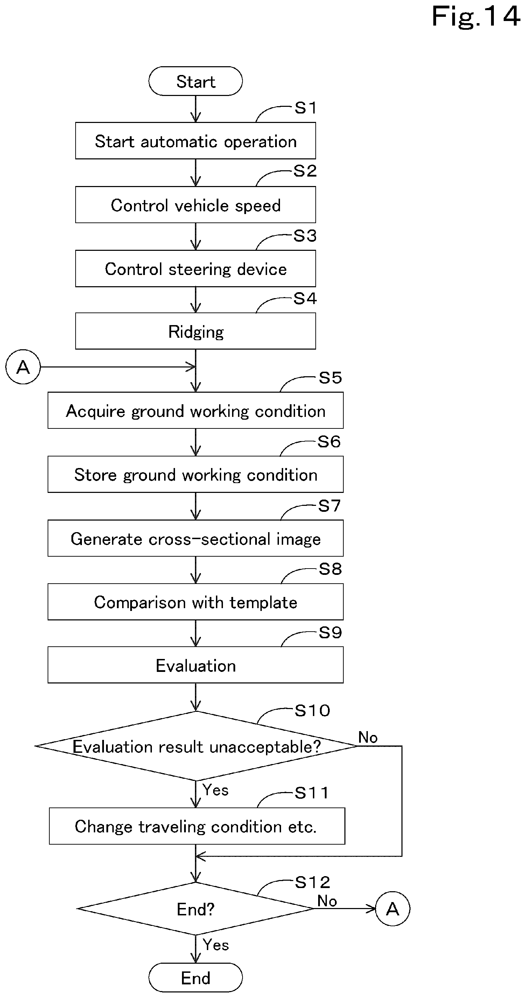

FIG. 14 is a flowchart illustrating changing of the traveling condition or the like of the traveling vehicle body 3 based on an estimation result obtained when ground work is performed with a ridger. Although the following description is directed to a ridger for convenience of explanation, the same description is also applicable to other types of working devices 2.

As illustrated in FIG. 14, the automatic operation controller 20b starts automatic operation based on an instruction for automatic operation (S1). The automatic operation controller 20b controls the transmission 5 and/or the like such that the vehicle speed of the working machine 1 reaches a vehicle speed set in accordance with the planned travel route L (e.g., the straight section L1) (S2). The automatic operation controller 20b controls the steering device 11 based on the position of the vehicle body estimated by the position estimator 20a and based on the planned travel route L (e.g., the straight section L1) (S3).

The automatic operation controller 20b (the controller 20) causes ridging to be performed by the working device 2 (ridger), based on an instruction for ridging (S4). The instruction for ridging includes an instruction from the driver to start ridging, or an instruction to start preset automatic ridging.

As illustrated in FIG. 8A, under a situation where ground work is being performed, the second sensor assembly 25b (the sensor assembly 25) acquires the point cloud data PD representing the ground working condition (i.e., the point cloud data PD representing one or more geographical features including the ridge M1) (S5). The storing device 21 stores the point cloud data PD representing the ground working condition acquired by the second sensor assembly 25b (S6). At S5, the imager 26 may, under a situation where ground work is being performed, capture an image of the ground working condition. At S6, the storing device 21 may store a ground work image representing the captured image of the ground working condition.

The arithmetic processor 20c generates the cross-sectional image G (see FIGS. 9B and 10B) from the point cloud data PD stored in the storing device 21 (e.g., the point cloud data PD in FIGS. 9A and 10A representing one or more geographical features including the ridge M1) (S7).

The arithmetic processor 20c performs matching between the template image TP and the cross-sectional image G of a geographical feature including the formed object M (e.g., the ridge M1) formed by the working device 2 on the agricultural field H1 (S8). That is, as illustrated in FIG. 8B, the cross-sectional image G and the template image TP are compared with each other. In the case of the ridge M1 having a semi-cylindrical shape, the arithmetic processor 20c performs matching between the cross-sectional image G and the template image TP as illustrated in FIGS. 9D and 9E. In the case of the ridge M1 having a trapezoidal shape, the arithmetic processor 20c performs matching between the cross-sectional image G and the template image TP as illustrated in FIGS. 10D and 10E.

The arithmetic processor 20c evaluates the shape of the formed object M (e.g., the ridge M1) based on matching between the cross-sectional image G and the template image TP (S9). For example, when, as illustrated in FIGS. 9D and 10D, the difference D between the contour OL1 of the template image TP and the contour OL2 of the cross section of the formed object M is not equal to or greater than a threshold in any location, the arithmetic processor 20c determines, for a portion of the cross-sectional image G corresponding to the ridge M1, that the ridge M1 is not formed abnormally, and that the evaluation result is acceptable (S9).

When, as illustrated in FIGS. 9E and 10E, the difference D between the contour OL1 of the template image TP and the contour OL2 of the cross section of the formed object M is equal to or greater than the threshold in at least one location, the arithmetic processor 20c determines, for the portion of the cross-sectional image G corresponding to the ridge M1, that the ridge M1 is formed abnormally, and that the evaluation result is not acceptable (S9).

When the evaluation result is unacceptable (S10: Yes), the difference D between the contour OL1 of the template image TP and the contour OL2 of the cross section of the formed object M is equal to or greater than the threshold. This may indicate that the working device 2 (ridger) has not cultivated the soil to a sufficient depth. When the evaluation result is unacceptable (S10: Yes), the controller 20 changes the traveling condition or the like (S11: traveling-condition changing process). In the traveling-condition changing process, the controller 20 determines how to change the traveling condition based on operating information (prime-mover rotation speed, vehicle speed, the amount of accelerator depression, and/or the load factor of the prime mover 4) of the traveling vehicle body 3 stored in the storing device 21, and based on the evaluation result. For example, the controller 20 calculates, based on a simulation model, an evaluation function, or the like, a prime-mover rotation speed, a vehicle speed, an amount of accelerator depression, and/or a load factor of the prime mover 4 such that the difference D becomes less than the threshold (i.e., the difference D decreases). Upon calculating, in the traveling-condition changing process (S11), a prime-mover rotation speed, a vehicle speed, an amount of accelerator depression, and/or a load factor of the prime mover 4 such that the difference D becomes less than the threshold (i.e., the difference D decreases), then, in accordance with the calculated results, for example, the controller 20 increases or decreases the vehicle speed (set vehicle speed) set in accordance with the planned travel route L (e.g., the straight section L1), or increases or decreases the prime-mover rotation speed.

At S11, the controller 20 may, instead of or in addition to the changing of the traveling condition, change the working condition (S11: working-condition changing process). In the working-condition changing process, the controller 20 determines how to change the working condition based on operating information (the working height position of the working device 2, the rotation speed of the power take-off (PTO) (the rotation speed of the PTO shaft 6), the rotation speed of tilling blades, and/or the load factor of the prime mover 4) of the working device 2 stored in the storing device 21, and based on the evaluation result. For example, the controller 20 calculates, based on a simulation model, an evaluation function, or the like, a working height position of the working device 2, a rotation speed of the PTO shaft 6, a rotation speed of the tilling blades, and/or a load factor of the prime mover 4 such that the difference D becomes less than the threshold (i.e., the difference D decreases). Upon calculating, in the traveling-condition changing process (S11), a working height position of the working device 2, a rotation speed of the PTO shaft 6, a rotation speed of the tilling blades, and/or a load factor of the prime mover 4 such that the difference D becomes less than the threshold (i.e., the difference D decreases), then, in accordance with the calculated results, for example, the controller 20 raises or lowers the position of the working device 2 set in accordance with the planned travel route L (e.g., the straight section L1), or increases or decreases the prime-mover rotation speed.

After S11, or in a case where the evaluation result is acceptable (S10: No), the controller 20 determines whether the current work is to be ended (S12). When the current work is not to be ended (S12: No), the controller 20 returns to S5. The controller 20 (the arithmetic processor 20c) continues to perform evaluation for the next cross-sectional image G (S5 to S10). When the current work is to be ended (S12: Yes), the controller 20 ends the present procedure.

Although FIG. 14 illustrates the case where automatic operation is performed, manual operation may be performed. The working machine 1 may include a notifier 28 to, when the evaluation result for the formed object M (e.g., the ridge M1) is not acceptable in the case of manual operation, notify the driver to that effect. The notifier 28 is, for example, a speaker, buzzer, or the like that outputs a notification sound (such as voice guidance or a warning sound) indicating that the evaluation result is not acceptable. The notifier 28 may be the display 15. For example, the display 15 may, instead of or in addition the output of a notification sound via the speaker, the buzzer, or the like, display a notification indicating that the evaluation result is not acceptable. That is, the notifier 28 alerts the driver in the case of manual operation. This allows the driver to take an action such as reducing the vehicle speed or lowering the working device 2 to a deeper position (lowering the working height of the working device 2).

The evaluation system S according to the embodiment evaluates the shape of the formed object M not by using a camera but by using the sensor assembly 25 (LiDAR). For example, with methods that rely on stereo matching using cameras (passive stereo based on images from the cameras), it is difficult to evaluate the shape of the formed object M having a texture with few distinguishing features. In contrast, the sensor assembly 25 (LiDAR) enables measurement even when the texture has few distinguishing features. Thus, the evaluation system S enables accurate acquisition of three-dimensional information compared with methods that rely on stereo matching using cameras. However, this does not mean not using cameras at all or not being able to use cameras at all during a procedure in which the traveling condition or the like of the traveling vehicle body 3 is changed based on an evaluation result obtained when ground work is performed with a ridger. Cameras may be used depending on the situation, the kind of processing to be performed, and/or the like.

Subsequently, the evaluation system S according to the embodiment evaluates the shape of the formed object M by using the template image TP inferred from the working device 2 (ridger: soil shaper). For example, with conventional methods that evaluate the shape of the formed object M based on an ideal ground surface condition obtained through actual measurement, the ideal ground surface condition needs to be acquired by actually performing measurement once in advance. Moreover, forming neat and straight ridges in order to obtain an ideal ground surface condition is technically difficult, even for skilled drivers. In contrast, the evaluation system S uses the template image TP. That is, the template image TP can be estimated from the shape of the working device 2 (ridger: soil shaper). The evaluation system S thus does not need to measure and acquire the ideal ground surface condition.

Since conventional methods involve comparing the ideal ground surface condition with the measured ground surface condition, the conventional methods are affected by lateral misalignment, which may result in reduced evaluation accuracy. With the conventional methods, it is difficult to identify the difference between the ideal ground surface condition and the ground surface condition to be evaluated. In contrast, the template image TP used in the evaluation system S is not affected by lateral misalignment. This provides the advantage of improved evaluation accuracy. Compared with the conventional evaluation methods, the evaluation system S provides the advantage of requiring low implementation effort and being less affected by misalignment.

The following describes main characteristic items of evaluation systems S and evaluation methods according to example embodiments and the like described above and effects achieved thereby.

(Item A1) An evaluation system S including an arithmetic processor 20c configured or programmed to evaluate a shape of a formed object M formed by a working device 2 on an agricultural field H1, based on matching between a template image TP and a cross-sectional image G of a geographical feature including the formed object M.

With this configuration, through matching between the template image TP and the cross-sectional shape of the formed object M appearing in the cross-sectional image G, the degree of match between the template image TP and the cross-sectional shape of the formed object M can be determined. This makes it possible to evaluate whether the shape of the formed object M formed by the working device 2 on the agricultural field H1 is acceptable.

(Item A2) The evaluation system S according to item A1, wherein the arithmetic processor 20c is configured or programmed to acquire a geographical feature image C representing the geographical feature including the formed object M, and generate the cross-sectional image G from the geographical feature image C.

With the configuration, from the geographical feature image C representing a geographical feature including the formed object M formed by the working device 2 on the agricultural field H1, the cross-sectional image G is generated, which is a cross section of the geographical feature image C. The contour of the formed object M is represented in the cross-sectional image G, and thus the shape of the formed object M can be correctly evaluated.

(Item A3) The evaluation system S according to item A1 or A2, wherein the formed object M has an elongated shape in plan view, and the cross-sectional image G is a cross-sectional image of the geographical feature image C taken along a plane perpendicular to a longitudinal direction of the formed object M.

With this configuration, the cross-sectional image G is a transverse cross-sectional image of the elongated formed object M taken along a plane perpendicular to the longitudinal direction of the elongated formed object M. This makes it possible to acquire the cross-sectional image G representing a transverse cross section of a geographical feature including the formed object M, and thus correctly evaluate the transverse cross-sectional shape of the formed object M.

(Item A4) The evaluation system S according to any one of items A1 to A3, wherein the arithmetic processor 20c is configured or programmed to superimpose the template image TP on the cross-sectional image G, and select, as a position-for-comparison Pcp, a position at which an area of overlap of the template image TP and a cross section of the formed object M that is included in the cross-sectional image G is largest.

With this configuration, the cross section of the formed object M included in the cross-sectional image G, and the template image TP can be properly aligned with each other. This allows the shape of the formed object M to be evaluated with improved accuracy.

(Item A5) The evaluation system S according to item A4, wherein the arithmetic processor 20c is configured or programmed to determine that the formed object M is formed abnormally when a difference D between a contour OL 1 of the template image TP at the position-for-comparison Pcp and a contour OL2 of the cross section of the formed object M is equal to or greater than a threshold.

This configuration makes it possible to identify a formation abnormality in formation of the formed object that is difficult to recognize or likely to be overlooked with human eyes.

(Item A6) The evaluation system S according to item A5, wherein the arithmetic processor 20c is configured or programmed to generate a contour difference image F showing the difference D between the contour OL1 of the template image TP and the contour OL2 of the cross section of the formed object M.

With this configuration, the contour difference image F shows the difference(s) D each between the contour OL1 of the template image TP and the contour OL2 of the cross section of the formed object M. This allows the user to visually recognize a portion of the contour OL2 of the formed object M in which the difference D from the contour OL1 of the template image TP is large, and the degree of the difference.

(Item 7) The evaluation system S according to item A6, wherein the arithmetic processor 20c is configured or programmed to indicate, in a specific manner SG, a portion of the contour difference image F in which the difference D is equal to or greater than the threshold.

With this configuration, a portion of the contour difference image F in which the difference D is equal to or greater than the threshold is indicated in the specific manner SG. This makes it possible to clearly indicate a location of a formation abnormality in the contour difference image F. It can be thus clearly indicated to the user where there is a formation abnormality in formation of the formed object M in the contour difference image F.

(Item A8) The evaluation system S according to item A7, wherein the threshold includes a first threshold and a second threshold having a greater value than the first threshold, and the arithmetic processor 20c is configured or programmed to not indicate a portion of the contour difference image F in which the difference D is equal to or less than the first threshold in the specific manner SG, indicate a portion of the contour difference image F in which the difference D is greater than the first threshold and equal to or less than the second threshold in a first specific manner SG1 which is a type of the specific manner SG, and indicate a portion of the contour difference image F in which the difference D is greater than the second threshold in a second specific manner SG2 which is another type of the specific manner SG different from the first specific manner SG1.

With this configuration, a portion of the contour difference image F in which the difference D is greater than the first threshold and equal to or less than the second threshold is indicated in the first specific manner SG1, and a portion of the contour difference image F in which the difference D is greater than the second threshold is indicated in the second specific manner SG2. The locations of formation abnormalities in the contour difference image F can be thus clearly indicated in at least two distinct levels. It can be thus clearly indicated to the user where there is a formation abnormality in formation of the formed object M in the contour difference image F.

(Item A9) The evaluation system S according to any one of items A6 to A8, further including a memory and/or a storage 21 to store the contour difference image F and a piece of position information of the contour difference image F such that the contour difference image F and the piece of position information are associated with each other, wherein the arithmetic processor 20c is configured or programmed to generate a series difference image FA in which a plurality of the contour difference images F stored in the memory and/or the storage 21 are arranged in the order of positions of the plurality of contour difference images F based on a plurality of the pieces of position information of the respective plurality of contour difference images F.

With this configuration, since the series difference image FA is a series of contour difference images F representing the formed object M in plan view, the series difference image FA can indicate, for the entire formed object M, the distribution and degrees of formation abnormalities. This allows the user to visually recognize the distribution and degrees of formation abnormalities in the entire formed object M.

(Item A10) The evaluation system S according to any one of items A6 to A9, further including a working machine 1 including the working device 2, a traveling vehicle body 3 to attach the working device 2 thereto, and a position detector 27 to acquire a position of the traveling vehicle body 3, wherein the memory and/or the storage 21 stores a speed of the traveling vehicle body 3, the position of the traveling vehicle body 3 acquired by the position detector 27, a working condition of the working device 2, and the contour difference image F such that the speed of the traveling vehicle body 3, the position of the traveling vehicle body 3 acquired by the position detector 27, the working condition of the working device 2, and the contour difference image F are associated with each other.

This configuration makes it possible to identify the relationship between the contour difference image F, the vehicle speed, the position of the vehicle body, and the working condition of the working device 2.

(Item A11) The evaluation system S according to any one of items A2 to A8, further including a sensor assembly 25 to acquire the geographical feature image C which is point cloud data representing one or more geographical features in a surrounding area of the working device 2.

With this configuration, since the sensor assembly 25 acquires the point cloud data PD, three-dimensional information can be accurately acquired even in a case where the agricultural field H1, the formed object M, and the like have a texture (e.g., texture that is felt when touching the surface, visual appearance) with few distinguishing features. This enables the shape of the formed object M to be evaluated with improved accuracy.

(Item A12) The evaluation system S according to item A11, wherein the arithmetic processor 20c is configured or programmed to generate the cross-sectional image G from the point cloud data PD.

With this configuration, the cross-sectional image G generated from the point cloud data PD, and the template image TP can be compared with each other to evaluate the shape of the formed object M.

(Item A13) The evaluation system S according to item A12, further including a working machine 1 including the working device 2, a traveling vehicle body 3 to attach the working device 2 thereto, a position detector 27 to acquire a position of the traveling vehicle body 3, and the sensor assembly 25, wherein the arithmetic processor 20c is configured or programmed to acquire position information of the point cloud data PD based on position information from the position detector 27 and based on range information from the sensor assembly 25, convert, based on the position information of the point cloud data PD, each of pieces of extracted point cloud data PD1 extracted from regions-of-interest K of the point cloud data PD into a world coordinate system from a coordinate system of the sensor assembly 25, the regions-of-interest being different in terms of position information from each other, and combine the pieces of extracted point cloud data PD1 of the regions-of-interest K in the world coordinate system.

With this configuration, since pieces of point cloud data PD from regions-of-interest K that differ in terms of position can be appropriately positioned relative to each other and combined with each other, the point cloud data PD can be dense at the location where the pieces of point cloud data PD are merged. This makes it possible to improve the quality of point cloud data PD.

(Item A14) The evaluation system S according to item A13, wherein the arithmetic processor 20c is configured or programmed to generate the cross-sectional image G from sliced point cloud data PD2 with a predetermined thickness obtained by slicing, along a plane perpendicular to a direction of travel of the traveling vehicle body 3, the combined pieces of extracted point cloud data PD1 in the world coordinate system.

With this configuration, the cross-sectional images G can be sequentially generated from pieces of sliced point cloud data PD2 each corresponding to a predetermined distance traveled by the traveling vehicle body 3.

(Item A15) The evaluation system S according to item A14, wherein the arithmetic processor 20c is configured or programmed to interpolate points representing a contour of the geographical feature in the sliced point cloud data PD2 to obtain a curve, and generate the cross-sectional image G from the interpolated sliced point cloud data PD2.

With this configuration, contour segments scattered in the cross-sectional image G can be converted into a curved contour through interpolation, so that the contour of the cross section of the formed object M can be formed into a curve. This makes it possible to appropriately calculate the difference between the contour of the template image TP and the contour of the cross section of the formed object M, and therefore improve the accuracy of determination of a formation abnormality.

(Item A16) The evaluation system S according to any one of items A1 to A15, wherein the template image TP is an estimated image representing a shape of the formed object M that is estimated to be formed by the working device 2.

With this configuration, the template image TP is an estimated image representing the shape of the formed object M that is estimated to be formed by the working device 2. This eliminates the need to prepare an image representing the actual shape of the formed object M formed by the working device 2. The template image TP can be thus generated easily and without much effort.

(Item A17) The evaluation system S according to item A16, wherein the arithmetic processor 20c is configured or programmed to define the template image TP according to the working device 2.

With this configuration, the template image TP is defined according to the working device 2. This makes it possible to appropriately perform determination about a formation abnormality for different formed objects M having outlines differing (in at least one of shape or size) depending on the working device 2.

(Item A18) The evaluation system S according to item A17, wherein the arithmetic processor 20c is configured or programmed to define the template image TP according to at least one of a type or configuration information of the working device 2.

With this configuration, the template image TP is defined according to at least one of the type or configuration information (information for use in determining at least one of ridge height, ridge width, ridge shape, or ridge spacing) of the working device 2. This makes it possible to appropriately perform determination about a formation abnormality for different formed objects M having outlines differing (in at least one of shape or size) depending on at least one of the type or configuration information of the working device 2.

(Item A19) An evaluation method including causing a arithmetic processor 20c to evaluate a shape of a formed object M formed by a working device 2 on an agricultural field H1, based on matching between a template image TP and a cross-sectional image G of a geographical feature including the formed object M.

This configuration makes it possible to evaluate whether the shape of the formed object M formed by the working device 2 on the agricultural field H1 is acceptable.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. An evaluation system (S) comprising:
an arithmetic processor (20c) configured or programmed to evaluate a shape of a formed object (M) formed by a working device (2) on an agricultural field (H), based on matching between a template image (TP) and a cross-sectional image (G) of a geographical feature including the formed object (M).

2. The evaluation system (S) according to claim 1, wherein the arithmetic processor (20c) is configured or programmed to acquire a geographical feature image (C) representing the geographical feature including the formed object (M), and generate the cross-sectional image (G) from the geographical feature image (C).

3. The evaluation system (S) according to claim 1 or 2, wherein
the formed object (M) has an elongated shape in plan view; and
the cross-sectional image (G) is a cross-sectional image of the geographical feature image (C) taken along a plane perpendicular to a longitudinal direction of the formed object (M).

4. The evaluation system (S) according to any one of claims 1 to 3, wherein the arithmetic processor (20c) is configured or programmed to superimpose the template image (TP) on the cross-sectional image (G), and select, as a position-for-comparison (Pcp), a position at which an area of overlap of the template image (TP) and a cross section of the formed object (M) that is included in the cross-sectional image (G) is largest.

5. The evaluation system (S) according to claim 4, wherein the arithmetic processor (20c) is configured or programmed to determine that the formed object (M) is formed abnormally when a difference (D) between a contour (OL1) of the template image (TP) at the position-for-comparison (Pcp) and a contour (OL2) of the cross section of the formed object (M) is equal to or greater than a threshold.

6. The evaluation system (S) according to claim 5, wherein the arithmetic processor (20c) is configured or programmed to generate a contour difference image (F) showing the difference (D) between the contour (OL1) of the template image (TP) and the contour (OL2) of the cross section of the formed object (M).

7. The evaluation system (S) according to claim 6, wherein the arithmetic processor (20c) is configured or programmed to indicate, in a specific manner (SG), a portion of the contour difference image (F) in which the difference (D) is equal to or greater than the threshold.

8. The evaluation system (S) according to claim 7, wherein
the threshold includes a first threshold and a second threshold having a greater value than the first threshold; and
the arithmetic processor (20c) is configured or programmed to:
not indicate a portion of the contour difference image (F) in which the difference (D) is equal to or less than the first threshold in the specific manner (SG);
indicate a portion of the contour difference image (F) in which the difference (D) is greater than the first threshold and equal to or less than the second threshold in a first specific manner (SG1) which is a type of the specific manner (SG); and
indicate a portion of the contour difference image (F) in which the difference (D) is greater than the second threshold in a second specific manner (SG2) which is another type of the specific manner (SG) different from the first specific manner (SG1).

9. The evaluation system (S) according to any one of claims 6 to 8, further comprising a memory and/or a storage (21) to store the contour difference image (F) and a piece of position information of the contour difference image (F) such that the contour difference image (F) and the piece of position information are associated with each other; wherein
the arithmetic processor (20c) is configured or programmed to generate a series difference image (FA) in which a plurality of the contour difference images (F) stored in the memory and/or the storage (21) are arranged in the order of positions of the plurality of contour difference images (F) based on a plurality of the pieces of position information of the respective plurality of contour difference images (F).

10. The evaluation system (S) according to claims 6 to 9, further comprising:
a working machine (1) including:
the working device (2);
a traveling vehicle body (3) to attach the working device (2) thereto; and
a position detector (27) to acquire a position of the traveling vehicle body (3);
wherein
the memory and/or the storage (21) stores a speed of the traveling vehicle body (3), the position of the traveling vehicle body (3) acquired by the position detector (27), a working condition of the working device (2), and the contour difference image (F) such that the speed of the traveling vehicle body (3), the position of the traveling vehicle body (3) acquired by the position detector (27), the working condition of the working device (2), and the contour difference image (F) are associated with each other.

11. The evaluation system (S) according to claim 2, taken in combination with any one of claims 1 to 10, further comprising a sensor assembly (25) to acquire the geographical feature image (C) which is point cloud data (PD) representing one or more geographical features in a surrounding area of the working device (2).

12. The evaluation system (S) according to claim 11, wherein the arithmetic processor (20c) is configured or programmed to generate the cross-sectional image (G) from the point cloud data (PD).

13. The evaluation system (S) according to claim 12, further comprising:
a working machine (1) including:
the working device (2);
a traveling vehicle body (3) to attach the working device (2) thereto;
a position detector (27) to acquire a position of the traveling vehicle body (3); and
the sensor assembly (25); wherein
the arithmetic processor (20c) is configured or programmed to:
acquire position information of the point cloud data (PD) based on position information from the position detector (27) and based on range information from the sensor assembly (25);
convert, based on the position information of the point cloud data (PD), each of pieces of extracted point cloud data (PD1) extracted from regions-of-interest (K) of the point cloud data (PD) into a world coordinate system from a coordinate system of the sensor assembly (25), the regions-of-interest (K) being different in terms of position information from each other; and
combine the pieces of extracted point cloud data (PD1) of the regions-of-interest (K) in the world coordinate system.

14. The evaluation system (S) according to any one of claims 1 to 13, wherein the template image (TP) is an estimated image representing a shape of the formed object (M) that is estimated to be formed by the working device (2).

15. An evaluation method comprising causing an arithmetic processor (20c) to evaluate a shape of a formed object (M) formed by a working device (2) on an agricultural field (H1), based on matching between a template image (TP) and a cross-sectional image (G) of a geographical feature including the formed object (m).
